# EUROPEAN PATENT APPLICATION

(11) **EP 3 806 579 A1**
(43) Date of publication of application: **14.04.2021**
(21) Application number: 19811336.7
(22) Date of filing: 28.05.2019
(51) Int. Cl.: H05B 3/20, H05B 3/03, H05B 3/10

(54) **HEAT GENERATING SHEET**

(30) Priority: 30.05.2018 JP 2018103875
(71) Applicant: LINTEC CORPORATION, Itabashi-ku Tokyo 173-0001 (JP)
(72) Inventor: ITO, Masaharu, Tokyo 173-0001 (JP); HAGIHARA, Yoshiaki, Tokyo 173-0001 (JP)
(74) Representative: Dehns
(86) International application number: PCT/JP2019/021126
(87) International publication number: WO 2019/230731

(57) **Abstract**

A heat-generating sheet including:an electrically conductive sheet having a pseudo sheet structure, serving as a heat-generating region, in which a plurality of electrically conductive linear-bodies, each having a diameter D of 100 µm or less and extending in one direction, are arranged at intervals; one or more first strip electrodes each electrically connected to one end in a longitudinal direction of each of the plurality of electrically conductive linear-bodies in the pseudo sheet structure; and a plurality of second strip electrodes each electrically connected to another end in the longitudinal direction of each of the plurality of electrically conductive linear-bodies in the pseudo sheet structure, a plurality of heat-generating regions, which serve as the heat-generating region, being formed between the plurality of second strip electrodes and the one or more first strip electrodes, wherein the plurality of heat-generating regions are coupled with the respective one or more first strip electrodes or the respective second strip electrodes so that conduction directions of adjacent heat-generating regions alternate with each other.

## Description

### Technical Field

The disclosure relates to a heat-generating sheet.

### Background Art

Heat-generating sheets are variously used as heat-generating sheets such as heat-generating sheets for melting snow and ice or heat-generating sheets for heating.

For example, Patent Literature 1 discloses "A sheet includes a pseudo-sheet structure including a plurality of linear-bodies with a volume resistivity R of from 1.0 x 10⁻⁷ Qcm to 1.0 x 10⁻¹ extending in one direction, aligned parallel to one another, and spaced apart from one another, satisfies the relation: L/D ≥ 3, wherein D represents the diameter of the linear-bodies, and L represents the spacing between adjacent ones of the linear-bodies, and also satisfies the relation: (D²/R) x (1/L) ≥ 0.003, wherein D represents the diameter of the linear-bodies, L represents the spacing between adjacent ones of the linear-bodies, R represents the volume resistivity of the linear-bodies, and D and L are in units of cm. A heating element and a heating device each include the sheet.".

Patent Literature 2 discloses "a film heater structure including a resistant heat-generating line wired and secured on a surface of a heat-resistant sheet, an ethylene-vinyl acetate layer integrated with the resistant heat-generating line buried therein, and a laminate film with which both upper and lower surfaces of the layer integrated are covered.".

### Citation List

### Patent Literature

Patent Literature 1: Japanese Patent Publication (JP-B) No. 6178948
Patent Literature 2: Japanese Patent Application Laid-Open (JP-A) No. H06-140134

### SUMMARY OF INVENTION

### Technical Problem

However, conventional heat-generating sheets have been controlled in resistance values only by the number and size of electrically conductive linear-bodies as heat-generating sources. Thus, it has been difficult to produce heat-generating sheets having different resistance values and provide an appropriate power (V × I) versus the intended use voltage.

An object of the disclosure is to provide a heat-generating sheet having a simple configuration and having an objective resistance value.

### Solution to Problem

The above problems are solved by the following measures.
<1> A heat-generating sheet including:
   an electrically conductive sheet having a pseudo sheet structure, serving as a heat-generating region, in which a plurality of electrically conductive linear-bodies, each having a diameter D of 100 µm or less and extending in one direction, are arranged at intervals;
   one or more first strip electrodes each electrically connected to one end in a longitudinal direction of each of the plurality of electrically conductive linear-bodies in the pseudo sheet structure; and
   a plurality of second strip electrodes each electrically connected to another end in the longitudinal direction of each of the plurality of electrically conductive linear-bodies in the pseudo sheet structure, a plurality of heat-generating regions, which serve as the heat-generating region, being formed between the plurality of second strip electrodes and the one or more first strip electrodes,
   wherein the plurality of heat-generating regions are coupled with the respective one or more first strip electrodes or the respective second strip electrodes so that conduction directions of adjacent heat-generating regions alternate with each other.
<2> a number NA of one or more strip electrodes EA, serving as the one or more first strip electrodes, which comprise a strip electrode EA1 and which are arranged with the strip electrode EA1 being at an end, wherein NA ≥ 1, and
   a number NB of one or more strip electrodes EB, serving as the second strip electrodes, which include a strip electrode EB1 and which are arranged with the strip electrode EB 1 being at an end, wherein NA+1 ≥ NB ≥ NA and wherein one 2n-1^{th} heat-generating region is formed between an n^{th} strip electrode NBn counted from the strip electrode EB 1 in the NB of strip electrodes EB and an n^{th} strip electrode EAn counted from the strip electrode EA1 in the NA or the plurality of strip electrodes EA, and one 2n^{th} heat-generating region is formed between an n+1^{th} strip electrode EB (n+1) and the strip electrode EAn, and wherein NA ≥ n ≥ 1.
<3> The heat-generating sheet according to <1> or <2>, having heat-generating regions different in width in the plurality of heat-generating regions.
<4> The heat-generating sheet according to any one of <1> to <3>, including a strip electrode having heat-generating regions different in length in the plurality of heat-generating regions.
<5> The heat-generating sheet according to any one of <1> to <4>,
   wherein at least two first strip electrodes, two second strip electrodes, or a combination thereof, are arranged and provided in a longitudinal direction of the one or more first strip electrodes or the second strip electrodes, with adjacent first strip electrodes, second strip electrodes, or a combination thereof, being bordered by a slit section provided on the electrically conductive sheet.

### Advantageous Effect of Invention

According to the disclosure, a heat-generating sheet having a simple configuration and having an objective resistance value can be provided.

### BRIEF DESCRIPTION OF DRAWINGS

Figure 1 is a schematic plan view illustrating a heat-generating sheet according to a first embodiment.
Figure 2 is a schematic cross-sectional view (A-A cross-sectional view of Figure 1) illustrating the heat-generating sheet according to the first embodiment.
Figure 3 is a schematic plan view illustrating a heat-generating sheet according to a second embodiment.
Figure 4 is a schematic plan view illustrating a heat-generating sheet according to a third embodiment.
Figure 5 is a schematic plan view illustrating a heat-generating sheet according to a fourth embodiment.
Figure 6 is a schematic plan view illustrating a heat-generating sheet according to a fifth embodiment.
Figure 7 is a schematic cross-sectional view illustrating a modified example of a layer configuration of the heat-generating sheet according to the embodiment.
Figure 8 is a schematic plan view illustrating a conventional heat-generating sheet (heat-generating sheet including one first strip electrode and one second strip electrode).

### DESCRIPTION OF EMBODIMENTS

Hereinafter, an embodiment as one example of the disclosure will be described in detail.

Members having substantially the same function are herein marked with the same symbols throughout the drawings, and the descriptions thereof overlapped may be omitted.

A numerical value range herein represented by "(from) ... to ..." means a numerical value range including numerical values described before and after "to" as a lower limit and an upper limit, respectively.

The "width of a heat-generating region" means the length along with the arrangement direction (the direction perpendicular to the longitudinal direction of an electrically conductive linear-body) of an electrically conductive linear-body in a pseudo sheet structure.

The "length of a heat-generating region" means the length (the facing distance between a first strip electrode and a second strip electrode) along with the longitudinal direction of an electrically conductive linear-body in a pseudo sheet structure.

### <Heat-generating Sheet>

A heat-generating sheet according to the embodiment includes:
an electrically conductive sheet having a pseudo sheet structure, serving as a heat-generating region, in which a plurality of electrically conductive linear-bodies, each having a diameter D of 100 µm or less and extending in one direction, are arranged at intervals;
one or more first strip electrodes each electrically connected to one end in a longitudinal direction of each of the plurality of electrically conductive linear-bodies in the pseudo sheet structure; and
a plurality of second strip electrodes each electrically connected to another end in the longitudinal direction of each of the plurality of electrically conductive linear-bodies in the pseudo sheet structure, a plurality of heat-generating regions, which serve as the heat-generating region, being formed between the plurality of second strip electrodes and the one or more first strip electrodes,
wherein the plurality of heat-generating regions are coupled with the respective one or more first strip electrodes or the respective second strip electrodes so that conduction directions of adjacent heat-generating regions alternate with each other.

The heat-generating sheet according to the embodiment has a configuration in which a plurality of heat-generating regions formed between one or more first strip electrodes and a plurality of second strip electrodes are coupled with the respective first strip electrodes or the respective second strip electrodes so that the conduction directions of adjacent heat-generating regions alternate with each other. Specifically, for example, a configuration is adopted in which a plurality of heat-generating regions are successively laid with electrodes interposed and thus serve as one heat-generating region. In this regard, a configuration is adopted in which an electrically conductive sheet with strip electrodes, formed by providing such strip electrodes on such an electrically conductive sheet, is divided by a plurality of faces.

Thus, even in the case of the same number of electrically conductive linear-bodies and the same diameter of each of such bodies in the pseudo sheet structure serving as the heat-generating region, the distance of a conductive path can be changed depending on the respective numbers of the first strip electrodes and the second strip electrodes.

Specifically, in a case in which the heat-generating sheet according to the embodiment includes, for example, one first strip electrode and two second strip electrodes, the heat-generating sheet exhibits a four-fold resistance value, as the theoretical value, of the resistance value of a heat-generating sheet including one first strip electrode and one second strip electrode.

The heat-generating sheet according to the embodiment is thus a heat-generating sheet having a simple configuration and having an objective resistance value.

The heat-generating sheet according to the embodiment, in which a terminal for voltage application (namely, a terminal for conduction to the electrically conductive linear-bodies in the heat-generating region) is provided on not only any electrodes located on both ends of each conduction path of a plurality of heat-generating regions successively laid, but also any electrodes located in the middle of such conduction paths, can be thus changed in the lengths of such conduction paths in the plurality of heat-generating regions successively laid. The heat-generating sheet according to the embodiment corresponds to a heat-generating sheet having a simple configuration and having an objective resistance value, also from the above viewpoint.

In other words, the heat-generating sheet according to the embodiment allows any site serving as a non-heat-generating region to be created in the plurality of heat-generating regions. In this regard, a heat-generating sheet is achieved in which a region that generates heat can be selected from the plurality of heat-generating regions, depending on strip electrodes between which a voltage is applied.

The heat-generating sheet according to the embodiment enables the width of the heat-generating region to be changed by making the first strip electrodes or the second strip electrodes different in length. In other words, the heat-generating sheet according to the embodiment may include heat-generating regions different in width in the plurality of heat-generating regions.

Thus, any heat-generating region can be increased or decreased in resistance value, as compared with other heat-generating regions in the plurality of heat-generating regions. In other words, any heat-generating region can be increased or decreased in heat-generating temperature as compared with other heat-generating regions. As a result, a heat-generating sheet can be realized which partially has any heat-generating region high or low in temperature.

The heat-generating sheet according to the embodiment enables the length of the heat-generating region to be changed by allowing the facing distances between the first strip electrodes and the second strip electrodes to differ. In other words, the heat-generating sheet according to the embodiment may have heat-generating regions different in length in the plurality of heat-generating regions.

The heat-generating sheet can be thus changed in planar shape of the heat-generating region. As a result, a heat-generating sheet can be realized which has a planar shape depending on a heating subject having any planar shape.

In the heat-generating sheet according to the embodiment, at least two first strip electrodes, two second strip electrodes, or a combination thereof, may be arranged and provided in the longitudinal direction of the strip electrodes, with adjacent strip electrodes being bordered by a slit section provided on an electrically conductive sheet provided with strip electrodes. Specifically, for example, a configuration may be adopted in which one strip electrode is divided by the slit section to provide a plurality of first strip electrodes , second strip electrodes, or a combination thereof,. Such a configuration allows for a simple and high-producible heat-generating sheet in which a plurality of first strip electrodes , a plurality of second strip electrodes, or a combination thereof, are disposed.

Hereinafter, one example of configurations of the heat-generating sheet according to the embodiment will be described with reference to the drawings.

### (First Embodiment)

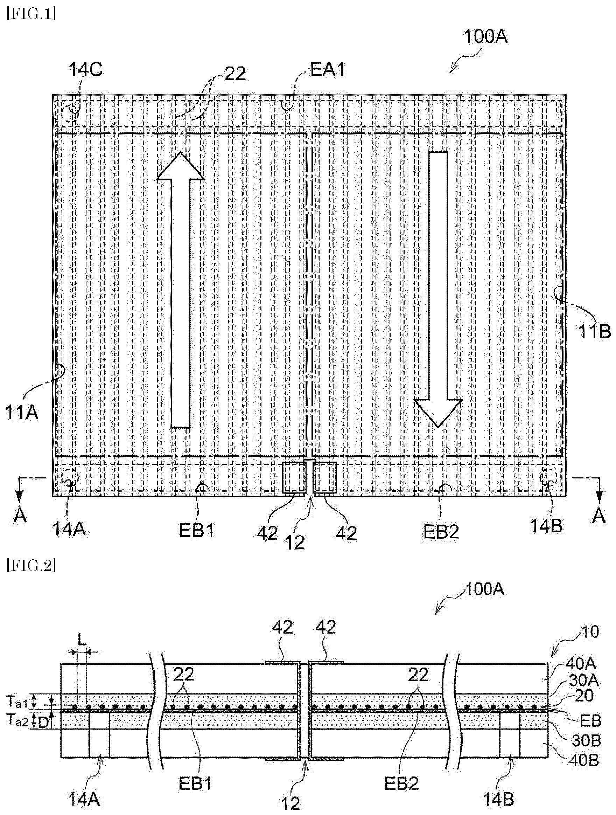

A heat-generating sheet 100A according to a first embodiment, as illustrated in Figure 1 to Figure 2, includes, for example,
one electrically conductive sheet 10 in which a plurality of electrically conductive linear-bodies 22 are arranged at intervals and which has a pseudo sheet structure 20 serving as a heat-generating region,
a strip electrode EA1 corresponding to one example of first strip electrodes EA, the strip electrode being electrically connected to one end in the longitudinal direction of each of the plurality of electrically conductive linear-bodies 22 in the pseudo sheet structure 20, and
a strip electrode EB1 and a strip electrode EB2 each corresponding to one example of second strip electrodes EB, such each electrode being electrically connected to another end in the longitudinal direction of each of the plurality of electrically conductive linear-bodies 22 in the pseudo sheet structure 20.

As illustrated in Figure 2, an electrically conductive sheet 10 includes, for example, a pseudo sheet structure 20 in which a plurality of electrically conductive linear-bodies 22 are arranged, an adhesive layer 30A which is provided on one surface of the pseudo sheet structure 20 and into which the pseudo sheet structure is embedded, a base material 40A provided on a surface of the adhesive layer 30A, the surface being opposite to the pseudo sheet structure 20, an adhesive layer 30B provided on another surface of the pseudo sheet structure 20, and a base material 40B provided on a surface of the adhesive layer 30B, the surface being opposite to the pseudo sheet structure 20. The strip electrode EA1, the strip electrode EB1, and the strip electrode EB2 (strip electrodes EB1 and EB2 in Figure 2) are provided between the adhesive layers 30A and 30B so as to be in contact with the plurality of electrically conductive linear-bodies 22.

The strip electrode EA1 is provided opposite to the strip electrode EB1 and strip electrode EB2. A first heat-generating region 11A is formed between the strip electrode EA1 and the strip electrode EB 1 in the pseudo sheet structure 20. A second heat-generating region 11B is formed between the strip electrode EA1 and the strip electrode EB2 in the pseudo sheet structure 20.

Such adjacent first heat-generating region 11A and second heat-generating region 11B are coupled with the strip electrode EA1 so that the conduction directions thereof alternate with each other.

Each arrow in Figure 1 indicates the conduction direction of each heat-generating region.

The strip electrode EA1 is a strip electrode having a length equivalent to or more than the width of the pseudo sheet structure 20 (length along with the arrangement direction of the electrically conductive linear-bodies), provided that the strip electrode EA1 has any length so that the electrode is not protruded from the electrically conductive sheet 10.

The strip electrode EB 1 and the strip electrode EB2 are charged electrodes which are the same in length (length along with the arrangement direction of the electrically conductive linear-bodies). The total length of the strip electrode EB1 and the strip electrode EB2 are equivalent to the length of the strip electrode EA1. The facing distance between the strip electrode EA1 and the strip electrode EB1 is equivalent to the facing distance between the strip electrode EA1 and the strip electrode EB2.

In other words, the first heat-generating region 11A and the second heat-generating region 11B are equivalent in terms of width and length. In other words, the heat-generating sheet 100A has a configuration obtained by evenly dividing the pseudo sheet structure 20 serving as the heat-generating region into halves.

The strip electrode EB 1 and the strip electrode EB2 are arranged and provided in the longitudinal direction of the electrodes, with the electrodes being bordered by a slit section 12 provided on one electrically conductive sheet 10. Specifically, for example, an electrically conductive sheet with strip electrodes (hereinafter, "electrically conductive sheet 10 with strip electrodes"), in which a strip electrode EB0 before cutting is provided on one electrically conductive sheet 10, is slit between a pair of adjacent electrically conductive linear-bodies 22. The strip electrode EB1 and the strip electrode EB2 separated by the slit section 12 are thus provided. An insulating layer 42 (a layer of, for example, a polyimide tape, a PET tape, a nylon tape, or an ethylene/propylene rubber tape) is provided in the slit section 12 in order to insulate the strip electrode EB1 and the strip electrode EB2.

The strip electrode EB 1 and the strip electrode EB2 are not limited to the above aspect, and an aspect may be adopted in which the electrodes are individually provided in advance.

The strip electrode EA1 is provided with a connecting portion 14C which is located in the middle of conduction paths of the first heat-generating region 11A and the second heat-generating region 11B and which is to be electrically connected to an external voltage application apparatus.

The strip electrode EB 1 and the strip electrode EB2 are provided with connecting portions 14A and 14B, respectively, which are located on both ends of each conduction path of the first heat-generating region 11A and the second heat-generating region 11B and which are each to be electrically connected to an external voltage application apparatus.

In other words, all the electrodes are also electrodes for voltage application (namely, for conduction).

The connecting portions 14A, 14B, and 14C are each provided by, for example, forming a through-hole reaching each electrode, in the adhesive layer 30B and the base material 40B. The connecting portions 14A, 14B, and 14C are subjected to wiring processing.

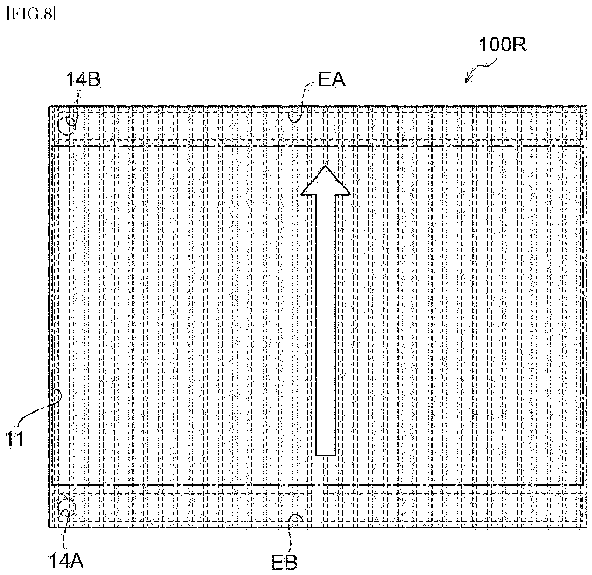

The heat-generating sheet 100A according to the first embodiment, described above, is a heat-generating sheet having a four-fold resistance value, as the theoretical value, as compared with a heat-generating sheet in which one first strip electrode EA and one second strip electrode EB are provided (see Figure 8: hereinafter, the heat-generating sheet will be referred to as "heat-generating sheet 100R illustrated in Figure 8"), in the case of application of a voltage (namely, the case of conduction) between the strip electrode EB 1 and the strip electrode EB2 through the connecting portion 14A and the connecting portion 14B.

The heat-generating sheet 100A according to the first embodiment enables the second heat-generating region 11B to be non-conductive, in the case of application of a voltage (namely, the case of conduction) between the strip electrode EA1 and the strip electrode EB 1 through the connecting portion 14A and the connecting portion 14C. In such a case, a heat-generating sheet is thus obtained which has a two-fold resistance value, as the theoretical value, as compared with the heat-generating sheet 100R illustrated in Figure 8. In other words, a heat-generating sheet is obtained in which a region that generates heat can be selected from the first heat-generating region 11A and the second heat-generating region 11B depending on electrodes between which a voltage is applied.

In Figure 8, reference numeral 11 represents a heat-generating region.

### (Second Embodiment)

A heat-generating sheet 100B according to a second embodiment is described. There is here omitted the description of any configuration which is the same as or similar to that of the heat-generating sheet 100A according to the first embodiment.

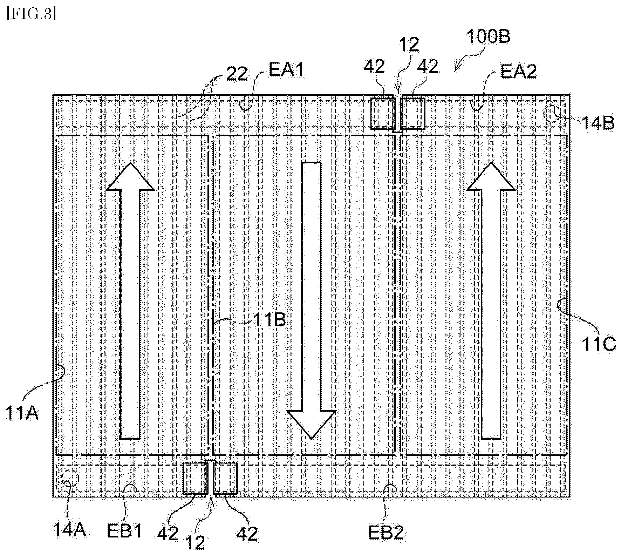

The heat-generating sheet 100B according to the second embodiment includes a strip electrode EA1 and a strip electrode EA2 each corresponding to one example of first strip electrodes EA, and a strip electrode EB1 and a strip electrode EB2 each corresponding to one example of second strip electrodes EB, as illustrated in Figure 3.

The strip electrode EA1 is provided opposite to the strip electrode EB1. The strip electrode EA1 and strip electrode EA2 are provided opposite to the strip electrode EB2.

A first heat-generating region 11A is formed between the strip electrode EA1 and the strip electrode EB1 in the pseudo sheet structure 20. A second heat-generating region 11B is formed between the strip electrode EA1 and the strip electrode EB2 in the pseudo sheet structure 20. A third heat-generating region 11C is formed between the strip electrode EA2 and the strip electrode EB2 in the pseudo sheet structure 20.

The first to third heat-generating regions 11A, 11B, and 11C are coupled with the strip electrode EA1 and strip electrode EB2 so that the conduction directions of adjacent heat-generating regions alternate with each other. Specifically, one end of the first heat-generating region 11A and one end of the second heat-generating region 11B are coupled with the strip electrode EA1 being interposed. In this regard, another end of the second heat-generating region 11B and one end of the third heat-generating region 11C are coupled with the strip electrode EB2 being interposed.

Each arrow in Figure 3 indicates the conduction direction of each heat-generating region.

The total length of the strip electrode EA1 and the strip electrode EA2 is equivalent to or more than the width of the pseudo sheet structure 20, provided that the total length of the strip electrode EA1 and the strip electrode EA2 is any length so that the electrodes are not protruded from the electrically conductive sheet 10. The length of the strip electrode EA2 is half the length of the strip electrode EA1.

The length of the strip electrode EB1 is half the length of the strip electrode EA1. The length of the strip electrode EB2 is equivalent to that of the strip electrode EA1. The total length of the strip electrode EB1 and the strip electrode EB2 are equivalent to the total length of the strip electrode EA1 and the strip electrode EA2.

The facing distance between the strip electrode EA1 and the strip electrode EB1, the facing distance between the strip electrode EA1 and the strip electrode EB2, and the facing distance between the strip electrode EA2 and the strip electrode EB2 are equivalent to one another.

In other words, the first to third heat-generating regions 11A, 11B, and 11C are equivalent in terms of width and length. In other words, the heat-generating sheet 100B has a configuration obtained by evenly dividing the pseudo sheet structure 20 serving as the heat-generating region into thirds.

The strip electrode EA1 and the strip electrode EA2 are arranged and provided in the longitudinal direction of the electrodes, with the electrodes being bordered by a slit section 12 provided on an electrically conductive sheet 10 with strip electrodes (one electrically conductive sheet 10 including a strip electrode EA0 before cutting), as in the strip electrode EB1 and the strip electrode EB2. An insulating layer 42 is provided in the slit section 12 in order to insulate the strip electrode EA1 and the strip electrode EA2, as in the strip electrode EB1 and the strip electrode EB2.

The strip electrode EA1 and the strip electrode EA2 are not limited to the above aspect, and an aspect may be adopted in which the electrodes are individually provided in advance.

The strip electrode EB1 and the strip electrode EA2 are provided with connecting portions 14A and 14B, respectively, which are located on both ends of each conduction path of the first to third heat-generating regions 11A, 11B, and 11C and which are each to be electrically connected to an external voltage application apparatus.

The heat-generating sheet 100B according to the second embodiment, described above, is a heat-generating sheet having a nine-fold resistance value, as the theoretical value, as compared with the heat-generating sheet 100R illustrated in Figure 8, in the case of application of a voltage between the strip electrode EB1 and the strip electrode EA2 through the connecting portion 14A and the connecting portion 14B.

The heat-generating sheet 100B according to the second embodiment also enables one or two of the first to third heat-generating regions 11A, 11B, and 11C to be non-conductive, in a case in which a connecting portion (not illustrated) is provided on each strip electrode and a voltage is applied between any two strip electrodes (namely, conducted). In such a case, a heat-generating sheet is thus obtained which has a three-fold or six-fold resistance value, as the theoretical value, as compared with the heat-generating sheet 100R illustrated in Figure 8. In other words, a heat-generating sheet is obtained in which a region that generates heat can be selected from the first to third heat-generating regions 11A, 11B, and 11C depending on electrodes between which a voltage is applied.

### (Third Embodiment)

A heat-generating sheet 100C according to the third embodiment is described. There is here omitted the description of any configuration which is the same as or similar to that of the heat-generating sheet 100A or 100B according to the first or second embodiment.

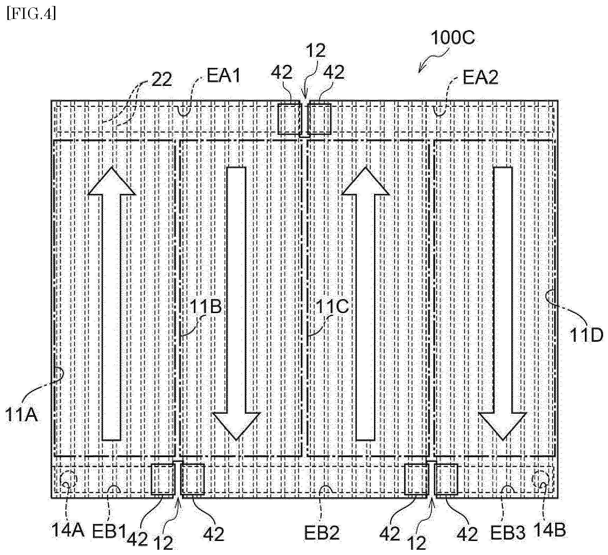

The heat-generating sheet 100C according to the third embodiment includes a strip electrode EA1 and a strip electrode EA2 each corresponding to one example of first strip electrodes EA, and a strip electrode EB1, a strip electrode EB2, and a strip electrode EB3 each corresponding to one example of second strip electrodes EB, as illustrated in Figure 4.

The strip electrode EA1 is provided opposite to the strip electrode EB1. The strip electrode EA1 and strip electrode EA2 are provided opposite to the strip electrode EB1. The strip electrode EA2 is provided opposite to the strip electrode EB3.

A first heat-generating region 11A is formed between the strip electrode EA1 and the strip electrode EB1 in the pseudo sheet structure 20. A second heat-generating region 11B is formed between the strip electrode EA1 and the strip electrode EB2 in the pseudo sheet structure 20. A third heat-generating region 11C is formed between the strip electrode EA2 and the strip electrode EB2 in the pseudo sheet structure 20. A fourth heat-generating region 11D is formed between the strip electrode EA2 and the strip electrode EB3 in the pseudo sheet structure 20.

The first to fourth heat-generating regions 11A, 11B, 11C, and 11D are coupled with the strip electrodes EA1, EA2, and EB2 so that the conduction directions of adjacent heat-generating regions with each other. Specifically, one end of the first heat-generating region 11A and one end of the second heat-generating region 11B are coupled with the strip electrode EA1 being interposed. In this regard, another end of the second heat-generating region 11B and one end of the third heat-generating region 11C are coupled with the strip electrode EB2 being interposed. In this regard, another end of the third heat-generating region 11C and one end of the fourth heat-generating region 11D are coupled with the strip electrode EA2 being interposed.

Each arrow in Figure 4 indicates the conduction direction of each heat-generating region.

The total length of the strip electrode EA1 and the strip electrode EA2 is equivalent to or more than the width of the pseudo sheet structure 20, provided that the total length of the strip electrode EA1 and the strip electrode EA2 is any length so that the electrodes are not protruded from the electrically conductive sheet 10. The strip electrode EA1 and the strip electrode EA2 are the same in length.

The length of the strip electrode EB1 is half the length of the strip electrode EA1. The length of the strip electrode EB2 is equivalent to the length of the strip electrode EA1. The length of the strip electrode EB3 is half the length of the strip electrode EA2. The total length of the strip electrodes EB1, EB2, and EB3 are equivalent to the total length of the strip electrode EA1 and the strip electrode EA2.

The facing distance between the strip electrode EA1 and the strip electrode EB1, the facing distance between the strip electrode EA1 and the strip electrode EB2, the facing distance between the strip electrode EA2 and the strip electrode EB2, and the facing distance between the strip electrode EA2 and the strip electrode EB3 are equivalent to one another.

In other words, the first to fourth heat-generating regions 11A, 11B, 11C, and 11D are equivalent in terms of width and length. In other words, the heat-generating sheet 100C has a configuration obtained by evenly dividing the pseudo sheet structure 20 serving as the heat-generating region into quarters.

The strip electrode EB2 and the strip electrode EB3 are arranged and provided in the longitudinal direction of the electrodes, with the electrodes being bordered by a slit section 12 provided on an electrically conductive sheet 10 with strip electrodes (one electrically conductive sheet 10 including a strip electrode EB0 before cutting), as in the strip electrode EB1 and the strip electrode EB2. An insulating layer 42 is provided in the slit section 12 in order to insulate the strip electrode EA1 and the strip electrode EA2, as in the strip electrode EB1 and the strip electrode EB2.

The strip electrode EB2 and the strip electrode EB3 are not limited to the above aspect, and an aspect may be adopted in which the electrodes are individually provided in advance.

The strip electrode EB1 and the strip electrode EB3 are provided with connecting portions 14A and 14B, respectively, which are located on both ends of each conduction path of the first to fourth heat-generating regions 11A, 11B, 11C, and 11D, and which are each to be electrically connected to an external voltage application apparatus.

The heat-generating sheet 100C according to the third embodiment, described above, is a heat-generating sheet having a sixteen-fold resistance value, as the theoretical value, as compared with the heat-generating sheet 100R illustrated in Figure 8, in the case of application of a voltage (namely, the case of conduction) between the strip electrode EB1 and the strip electrode EB3 through the connecting portion 14A and the connecting portion 14B.

The heat-generating sheet 100C according to the third embodiment also enables one to three of the first to fourth heat-generating regions 11A, 11B, 11C, and 11D to be non-conductive, in a case in which a connecting portion (not illustrated) is provided on each strip electrode and a voltage is applied between any two strip electrodes (namely, conducted). In such a case, a heat-generating sheet is thus obtained which has a twofold, fourfold, or eight-fold resistance value, as the theoretical value, as compared with the heat-generating sheet 100R illustrated in Figure 8. In other words, a heat-generating sheet is obtained in which a region that generates heat can be selected from the first to fourth heat-generating regions 11A, 11B, 11C, and 11D depending on electrodes between which a voltage is applied.

### (Fourth Embodiment)

A heat-generating sheet 100D according to a fourth embodiment is described. There is here omitted the description of any configuration which is the same as or similar to that of the heat-generating sheet 100C according to the third embodiment.

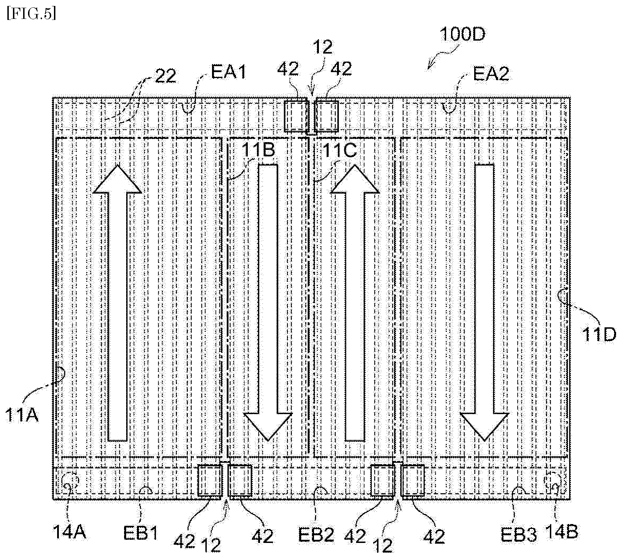

The heat-generating sheet 100D according to the fourth embodiment is a heat-generating sheet obtained by modifying the length of any strip electrode (namely, the width of the heat-generating region) in the heat-generating sheet 100C according to the third embodiment, as illustrated in Figure 5.

Specifically, for example, the length of each of strip electrodes EB1, EB2, and EB3 is one-third of the length of each of strip electrodes EA1 and EA2.

In other words, first and fourth heat-generating regions 11A and 11D are equivalent in terms of width and length, and second and third heat-generating regions 11B and 11C are equivalent in terms of width and length. The width of each of the first and fourth heat-generating regions 11A and 11D is two-fold the width of each of the second and third heat-generating regions 11B and 11C.

In other words, a configuration is adopted in which the second and third heat-generating regions 11B and 11C are high in resistance value and high in heat-generating temperature as compared with the first and fourth heat-generating regions 11A and 11D.

The heat-generating sheet 100D according to the fourth embodiment, described above, is a heat-generating sheet having an eighteen-fold resistance value, as the theoretical value, as compared with the heat-generating sheet 100R illustrated in Figure 8, in the case of application of a voltage (namely, the case of conduction) between the strip electrode EB1 and the strip electrode EB3 through the connecting portion 14A and the connecting portion 14B.

The heat-generating sheet 100D according to the fourth embodiment includes the second and third heat-generating regions 11B and 11C which are high in heat-generating temperature as compared with the first and fourth heat-generating regions 11A and 11D. In other words, the heat-generating sheet 100D according to the fourth embodiment is a heat-generating sheet partially having a heat-generating region high or low in temperature.

The width of each heat-generating region in the heat-generating sheet 100D according to the fourth embodiment is appropriately modified depending on an objective heat-generating temperature.

### (Fifth Embodiment)

A heat-generating sheet 100E according to a fifth embodiment is described. There is here omitted the description of any configuration which is the same as or similar to that of the heat-generating sheet 100A according to the first embodiment.

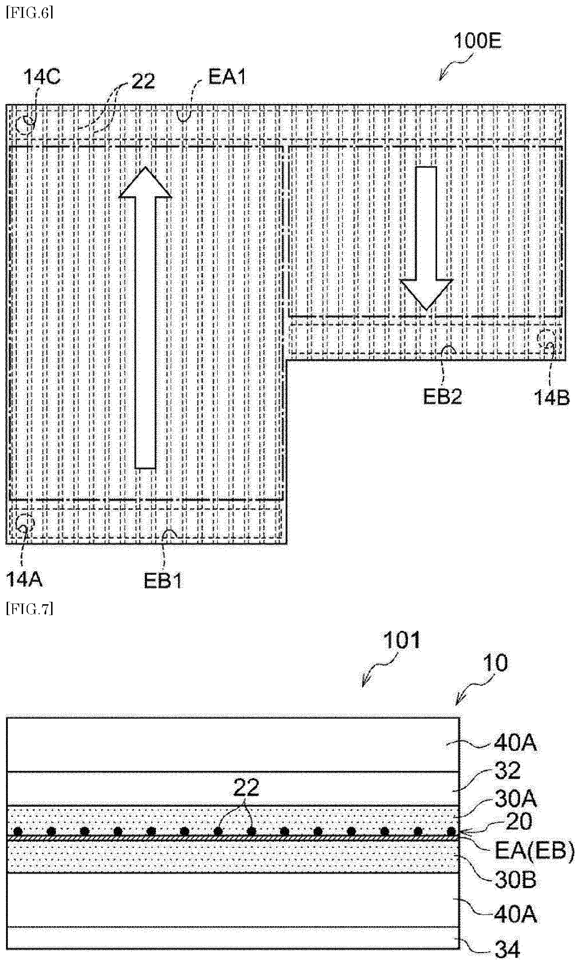

The heat-generating sheet 100E according to the fifth embodiment is a heat-generating sheet obtained by modifying the facing distance between strip electrodes (namely, the length of the heat-generating region) in the heat-generating sheet 100A according to the first embodiment, as illustrated in Figure 6.

Specifically, for example, the facing distance between a strip electrode EA1 and a strip electrode EB2 is half the facing distance between the strip electrode EA1 and a strip electrode EB1.

In other words, the length of a second heat-generating region is half the length of a first heat-generating region.

In the heat-generating sheet 100E, a slit section is, for example, provided in one electrically conductive sheet 10 which is electrically connected to a pseudo sheet structure 20 and in which the strip electrode EA1 and the strip electrode EB1 are disposed at an objective facing distance.

A slit section 12 may be provided in the electrically conductive sheet 10, between the strip electrode EB2 and a linear electrical conductor 22 adjacent thereto (specifically, a linear electrical conductor 22 closer to a first heat-generating region 11A, between two linear electrical conductors 22 sandwiching the boundary between a second heat-generating region 11B and a first heat-generating region 11A). An insulating layer 42 may be provided in the slit section in order to insulate the linear electrical conductor 22 and the strip electrode EB2.

The heat-generating sheet 100E according to the fifth embodiment, described above, is a heat-generating sheet having a three-fold resistance value, as the theoretical value, as compared with the heat-generating sheet 100R illustrated in Figure 8, in the case of application of a voltage (namely, the case of conduction) between the strip electrode EB1 and the strip electrode EB2 through the connecting portion 14A and the connecting portion 14B.

The heat-generating sheet 100E according to the fifth embodiment can also be modified in not only the resistance value, but also the planar shape of the heat-generating sheet, due to modification of the length of each heat-generating region. In other words, the heat-generating sheet 100E according to the fifth embodiment is a heat-generating sheet having a planar shape depending on a heating subject having any planar shape.

The length of each heat-generating region in the heat-generating sheet 100E according to the fifth embodiment is appropriately modified depending on the planar shape of such a heating subject.

### (Others)

The heat-generating sheet according to the embodiment may have a configuration as any combination of the configurations of the heat-generating sheets according to the first to fifth embodiments. The configuration of the heat-generating sheet according to the embodiment is not limited to those of the heat-generating sheets according to the first to fifth embodiments. Hereinafter, the heat-generating sheet according to the embodiment will be designated as "heat-generating sheet 100".

For example, the heat-generating sheet 100 according to the embodiment may be the following heat-generating sheet.

A heat-generating sheet including:
a number NA of strip electrode(s) EA, serving as the one or more first strip electrodes EA, which includes a strip electrode EA1 and which are arranged with the strip electrode EA1 being at an end, wherein NA ≥ 1, and
a number NB of one or more strip electrodes EB, serving as the second strip electrodes, which include a strip electrode EB1 and which are arranged with the strip electrode EB 1 being at an end, wherein NA+1 ≥ NB ≥ NA and wherein one 2n-1^{th} heat-generating region is formed between an n^{th} strip electrode NBn counted from the strip electrode EB 1 in the NB of strip electrodes EB and an n^{th} strip electrode EAn counted from the strip electrode EA1 in the NA or the plurality of strip electrodes EA, and one 2n^{th} heat-generating region is formed between an n+1^{th} strip electrode EB (n+1) and the strip electrode EAn, , and wherein NA ≥ n ≥ 1.

The heat-generating sheet 100A according to the first embodiment corresponds to a heat-generating sheet of such an aspect, in which the number NA of the first strip electrodes EA is 1 and the number NB of the second strip electrodes EB is 2. The heat-generating sheet 100B according to the second embodiment corresponds to a heat-generating sheet of such an aspect, in which the number NA of the first strip electrodes EA is 2 and the number NB of the second strip electrodes EB is 2. The heat-generating sheet 100C according to the third embodiment corresponds to a heat-generating sheet of such an aspect, in which the number NA of the first strip electrodes EA is 2 and the number NB of the second strip electrodes EB is 3.

In the case of NA = NB as in the heat-generating sheet 100B according to the second embodiment, n+1 > NB is satisfied in the case of n = NA, and thus no strip electrode EB(n+1) is present and no n+1^{th} heat-generating region is formed between the strip electrode EB(n+1) and the strip electrode EAn. For example, in the second embodiment, NA = NB = 2 is satisfied, and the strip electrode EB(n+1), namely, EB3 is not present in the case of n = 2.

For example, the heat-generating sheet 100 according to the embodiment may correspond to an aspect in which a plurality of electrically conductive sheets 10 are coupled. Specific examples include an aspect in which each strip electrode in the plurality of electrically conductive sheets is used for coupling so that the conduction directions of adjacent heat-generating regions in the plurality of electrically conductive sheets 10 alternate with each other.

### (Each Component)

Hereinafter, each component forming the heat-generating sheet 100 according to the embodiment will be described.

### -Pseudo Sheet Structure-

A pseudo sheet structure 20 is configured from a structure in which a plurality of electrically conductive linear-bodies 22 extending in one direction are arranged mutually at intervals with the distance between adjacent electrically conductive linear-bodies 22 being kept constant. Specifically, the pseudo sheet structure 20 is configured from, for example, a structure in which a plurality of electrically conductive linear-bodies 22 extending linearly are arranged in parallel to each other at equal intervals in a direction perpendicular to the longitudinal direction (or extending direction) of the electrically conductive linear-bodies 22. In other words, the pseudo sheet structure 20 is configured from, for example, a structure in which electrically conductive linear-bodies 22 are arranged in a stripe manner. The respective intervals between the plurality of electrically conductive linear-bodies 22 are preferably equal intervals, and may be unequal intervals.

The pseudo sheet structure 20 is embedded in an adhesive layer 30A and disposed therein.

The pseudo sheet structure 20 preferably satisfies formula: L/D ≥ 3 in the relationship between the diameter D of each of the electrically conductive linear-bodies 22 and the interval L between adjacent electrically conductive linear-bodies 22, and preferably satisfies formula: (D²/R) × (1/L) ≥ 0.003 in the relationship among the diameter D of each of the electrically conductive linear-bodies 22, the interval L between adjacent electrically conductive linear-bodies 22, and the volume resistivity R of the electrically conductive linear-bodies 22. In the formulae, the units of D and L are each cm. In a case in which a pseudo sheet structure 20 including electrically conductive linear-bodies 22 having a volume resistivity R in the range satisfies the above relationships, the pseudo sheet structure 20 is higher in light transmissiveness and lower in surface resistance. An adhesive layer 30A exposed from the pseudo sheet structure 20 is enhanced in adhesiveness.

Formula: 350 ≥ L/D ≥ 3 is preferably satisfied, formula: 250 ≥ L/D ≥ 5 is more preferably satisfied, from the viewpoints of light transmissiveness of the heat-generating sheet 100 and the surface resistance of the pseudo sheet structure 20. Formula: 20 ≥ (D²/R) × (1/L) ≥ 0.03 is preferably satisfied, formula: 15 ≥ (D²/R) × (1/L) ≥ 0.5 is more preferably satisfied, formula: 10 ≥ (D²/R) × (1/L) ≥ 3 is still more preferably satisfied, from the same viewpoints.

Both formula: 350 ≥ L/D ≥ 3 and formula: 7 ≥ (D²/R) × (1/L) ≥ 0.003 may satisfied, or both formula: 250 ≥ L/D ≥ 5 and formula: 5 ≥ (D²/R) × (1/L) ≥ 0.004 may satisfied.

It is preferable in the pseudo sheet structure 20 that the relationship between the diameter D of each of the plurality of electrically conductive linear-bodies 22 and the thickness Tₐ of the adhesive layer satisfies a relationship of formula: Tₐ ≥ 1.2 × D.

In a case in which the relationship of formula: Tₐ ≥ 1.2 × D is satisfied, the electrically conductive linear-bodies 22 can be avoided from being excessively protruded from the surface of the adhesive layer. As a result, the adhesive layer 30A exposed from the pseudo sheet structure 20 is enhanced in adhesiveness. In a case in which the relationship of formula: Tₐ ≥ 1.2 × D is satisfied, irregularities due to the electrically conductive linear-bodies 22 are easily prevented from appearing on the surface of the heat-generating sheet 100.

The thickness Tₐ of the adhesive layer may satisfy, for example, 5 × D ≥ Tₐ (preferably 3 × D ≥ Tₐ, more preferably 2 × D ≥ Tₐ) from the viewpoint of an excess increase in thickness of the heat-generating sheet 100.

The thickness Tₐ of the adhesive layer is the total thickness of a plurality of layers (for example, Tₐ = Tₐ₁ + Tₐ₂ in Figure 2) in a case in which the adhesive layer is formed from such a plurality of layers (for example, the adhesive layer 30A and the adhesive layer 30B in each of the above embodiments).

The diameter D of each of the electrically conductive linear-bodies 22 is here 100 µm or less. The diameter D of each of the electrically conductive linear-bodies 22 is preferably from 5 µm to 75 µm, more preferably from 8 µm to 60 µm, still more preferably from 12 µm to 40 µm. In a case in which the diameter D of each of the electrically conductive linear-bodies 22 is in the range, an increase in sheet resistance of the pseudo sheet structure 20 can be suppressed. The surface of the heat-generating sheet 100 can be prevented from being raised on a portion in which the electrically conductive linear-bodies 22 are present, without an excess increase in thickness of a base material 40A, even in a case in which the electrically conductive linear-bodies 22 are embedded in the adhesive layer 30A.

In particular, in a case in which the diameter D of each of the electrically conductive linear-bodies 22 is 8 µm or more, the pseudo sheet structure 20 is easily reduced in sheet resistance.

The diameter D of each of the electrically conductive linear-bodies 22 is defined as the average value obtained by observing the electrically conductive linear-bodies 22 of the pseudo sheet structure 20 with a digital microscope, and measuring the diameters of the electrically conductive linear-bodies 22 at five points randomly selected and averaging the diameters.

The interval L between the electrically conductive linear-bodies 22 is preferably 10 mm or less, more preferably 5 mm or less, still more preferably 3 mm or less. In a case in which the interval L between the electrically conductive linear-bodies 22 is 10 mm or less, the electrical resistance of the pseudo sheet structure 20 can be kept low. In a case in which the interval L between the electrically conductive linear-bodies 22 is small, the adhesiveness of the adhesive layer 30A tends to be deteriorated. However, even in a case in which the interval L between the electrically conductive linear-bodies 22 is small, the adhesiveness of the adhesive layer 30A can be kept in a case in which formula: Tₐ ≥ 1.2 × D is satisfied.

In a case in which the interval L between the electrically conductive linear-bodies 22 is 3 mm or less, the heat-generating sheet 100 can be suppressed in deterioration in function thereof, for example, an increase in electrical resistance of the pseudo sheet structure 20 or an ununiform distribution of temperature rise (variation in temperature rise) due to an increase of any region in which no heat is generated in the heat-generating sheet 100. The interval L between the electrically conductive linear-bodies 22 is preferably from 0.1 mm to 2 mm, more preferably from 0.3 mm to 1.5 mm, from such viewpoints.

The interval L between the electrically conductive linear-bodies 22 is determined by observing the electrically conductive linear-bodies 22 of the pseudo sheet structure 20 with a digital microscope, and measuring the interval between adjacent two electrically conductive linear-bodies 22.

The interval L between such adjacent electrically conductive linear-bodies 22 corresponds to the length which is along with the arrangement direction of the electrically conductive linear-bodies 22 and which is between opposite portions of such two electrically conductive linear-bodies 22 (see Figure 2). The interval L corresponds to the average interval value with respect to all adjacent electrically conductive linear-bodies 22 in a case in which the electrically conductive linear-bodies 22 are arranged at unequal intervals, and the electrically conductive linear-bodies 22 are preferably arranged at substantially equal intervals in the pseudo sheet structure 20 from the viewpoint that the value of the interval L is easily controlled and from the viewpoint that uniformity of each function such as light transmissiveness or heat-generating properties is ensured.

The volume resistivity R of the electrically conductive linear-bodies 22 is preferably from 1.0 × 10⁻⁹ Ω•m to 1.0 × 10⁻³ Ω•m, more preferably from 1.0 × 10⁻⁸ Q-m to 1.0 × 10⁻⁴ Ω•m. In a case in which the volume resistivity R of the electrically conductive linear-bodies 22 is in the range, the surface resistance of the pseudo sheet structure 20 is easily reduced.

The volume resistivity R of the electrically conductive linear-bodies 22 is measured as follows. First, the diameter D of each of the electrically conductive linear-bodies 22 is determined according to the above method. Next, both ends of each of the electrically conductive linear-bodies 22 are each coated with a silver paste, the resistance of a portion at a length of 40 mm is measured, and the resistance value of each of the electrically conductive linear-bodies 22 is determined. For example, in a case in which columnar objects each having the diameter D are used for the electrically conductive linear-bodies 22, the cross sectional area of each of the electrically conductive linear-bodies 22 is calculated, and the length measured above is multiplied therewith, thereby determining the volume. The resulting resistance value is divided by the volume, and the volume resistivity R of the electrically conductive linear-bodies 22 is calculated.

The electrically conductive linear-bodies 22 are each not particularly limited as long as such each body have electrical conductivity, and examples include a linear-body including a metal wire and a linear-body including an electrically conductive thread. The electrically conductive linear-bodies 22 may be each a linear-body including a metal wire and an electrically conductive thread (for example, a linear-body in which a metal wire and an electrically conductive thread are twined).

The linear-body including a metal wire and the linear-body including an electrically conductive thread each have high conducting properties and high electrically conducting properties, and thus are each applied as the electrically conductive linear-bodies 22, thereby easily resulting in a reduction in surface resistance of the pseudo sheet structure 20. The heat-generating sheet 100 easily realizes rapid heat generation. A linear-body small in diameter is also easily obtained.

Examples of the metal wire include a metal wire including a metal such as copper, aluminum, tungsten, iron, molybdenum, nickel, titanium, silver, or gold, or an alloy including two or more metals (for example, iron steel such as stainless steel or carbon steel, brass, phosphor bronze, an zirconium/copper alloy, beryllium copper, iron/nickel, nichrome, nickel/titanium, kanthal, hastelloy, or rhenium/tungsten). The metal wire may be plated by tin, zinc, silver, nickel, chromium, a nickel/chromium alloy, solder, or the like, or the surface thereof may be covered with a carbon material or a polymer described below.

Examples of the metal wire also include a metal wire covered with a carbon material. Such a metal wire covered with a carbon material is reduced in adhesiveness of the surface of the metal wire to the adhesive layer 30A. Thus, in a case in which linear-bodies including such a metal wire covered with a carbon material are applied to the electrically conductive linear-bodies 22, the electrically conductive linear-bodies 22 can be easily released from the adhesive layer 30A and the electrically conductive linear-bodies 22 can be easily elongated, even in a case in which corrugated electrically conductive linear-bodies 22 are straightened and elongated according to elongation of the heat-generating sheet 100 due to three-dimensional molding. The metal wire, which is covered with a carbon material, is also suppressed in metal corrosion.

Examples of the carbon material with which the metal wire is covered include amorphous carbon such as carbon black, activated carbon, hard carbon, soft carbon, mesoporous carbon, or a carbon fiber; graphite; fullerene; graphene; and a carbon nanotube.

The linear-body including an electrically conductive thread may be a linear-body including one electrically conductive thread, or may be a linear-body including a plurality of electrically conductive threads twined.

Examples of such an electrically conductive thread include a thread including an electrically conductive fiber (for example, a metal fiber, a carbon fiber, or a fiber of an ionically conductive polymer), a thread having a surface on which a metal (for example, copper, silver, or nickel) is plated or deposited, and a thread impregnated with a metal oxide.

Examples of the linear-body including the electrically conductive thread suitably include particularly a linear-body including a thread utilizing a carbon nanotube (hereinafter, also referred to as "carbon nanotube linear-body").

The carbon nanotube linear-body is obtained by, for example, drawing a carbon nanotube from an end portion of a carbon nanotube forest (which is a grown article obtained by growing a plurality of carbon nanotubes on a substrate so that the nanotubes are oriented perpendicular to the substrate, and which may also be referred to as "array"), into a sheet shape, bundling the carbon nanotube sheet drawn, and then twining such a carbon nanotube bundle. Such a production method, in the case of no application of any twisting in the twining, provides a ribbon-shaped carbon nanotube linear-body, and, in the case of application of twisting, provides a thread-shaped linear-body. The ribbon-shaped carbon nanotube linear-body is a linear-body having no structure of a carbon nanotube twisted. Such a carbon nanotube linear-body can also be obtained by, for example, spinning from a carbon nanotube dispersion. Such a carbon nanotube linear-body can be produced by spinning according to a method disclosed in, for example, US Patent Application Laid-Open No. US 2013/0251619 (JP-A No. 2011-253140). A thread-shaped carbon nanotube linear-body is desirably used from the viewpoint that uniformity of the diameter of a carbon nanotube linear-body is obtained, and a thread-shaped carbon nanotube linear-body is preferably obtained by twining a carbon nanotube sheet from the viewpoint that a carbon nanotube linear-body having a high purity is obtained. The carbon nanotube linear-body may be a linear-body in which two or more carbon nanotube linear-bodies are knitted.

The carbon nanotube linear-body may be a linear-body including a carbon nanotube and a metal (hereinafter, also referred to as "composite linear-body"). Such a composite linear-body not only maintains the above features of the carbon nanotube linear-body, but also is easily enhanced in electrical conductivity of the linear-body. In other words, a reduction in resistance of the pseudo sheet structure 20 is facilitated.

Examples of the composite linear-body include (1) a composite linear-body obtained by supporting a metal simple substance or a metal alloy on the surface of a carbon nanotube forest, sheet, or bundle, or a linear-body obtained by twining, by, for example, deposition, ion plating, sputtering, or wet plating, in a process of obtaining a carbon nanotube linear-body, the process involving drawing a carbon nanotube from an end portion of a carbon nanotube forest, into a sheet shape, bundling the carbon nanotube sheet drawn, and then twining such a carbon nanotube bundle, (2) a composite linear-body obtained by twining a carbon nanotube bundle together with a linear-body of a metal simple substance or a linear-body of a metal alloy, or a composite linear-body, and (3) a composite linear-body obtained by knitting a linear-body of a metal simple substance or a linear-body of a metal alloy, or a composite linear-body, and a carbon nanotube linear-body or a composite linear-body. In a case in which the carbon nanotube bundle is twined in the case of the composite linear-body (2), a metal may be supported on a carbon nanotube, as in the case of the composite linear-body (1). The composite linear-body (3), which is a composite linear-body in the case of knitting two linear-bodies, may be one obtained by knitting three or more of a carbon nanotube linear-body, or a linear-body of a metal simple substance, a linear-body of a metal alloy, or a composite linear-body as long as at least one linear-body of a metal simple substance, linear-body of a metal alloy, or composite linear-body is included.

Examples of the metal of the composite linear-body include a metal simple substance such as gold, silver, copper, iron, aluminum, nickel, chromium, tin, or zinc, and an alloy including at least one of such metal simple substances (for example, a copper-nickel-phosphorus alloy or a copper-iron- phosphorus-zinc alloy).

The surface resistance of the pseudo sheet structure 20 (Ω/□ = Ω/sq.) is preferably 800 Ω/□ or less, more preferably from 0.01 Ω/□ to 500 Ω/□, still more preferably from 0.05 Ω/□ to 300 Ω/□. A heat-generating sheet 100 low in surface resistance is required from the viewpoint of a reduction in voltage to be applied. Such a reduction in voltage to be applied is easily realized by a surface resistance of the sheet, of 800 Ω/□ or less.

The surface resistance of the sheet is measured according to the following method. First, both ends of the pseudo sheet structure 20 are each coated with a silver paste in order to enhance electrical connection. Thereafter, the heat-generating sheet 100 is pasted to a glass substrate with both ends onto which a copper tape is pasted, so that the silver paste and the copper tape are in contact with each other, thereafter the resistance is measured with an electrical tester, and the surface resistance of the sheet is calculated.

### -Adhesive Layer-

The adhesive layer is a layer including an adhesive. The heat-generating sheet 100 may be provided with two adhesive layers, the adhesive layers 30A and 30B, as in each of the above embodiments, or may be provided with, for example, only one layer, the adhesive layer 30A. Hereinafter, an example will be described in which the heat-generating sheet 100 is provided with the adhesive layers 30A and 30B.

The pseudo sheet structure 20 (namely, electrically conductive linear-bodies 22) is embedded in the adhesive layer 30A. The adhesive layer 30A and the adhesive layer 30B adhere to each other with the pseudo sheet structure 20 being interposed.

The adhesive layers 30A and 30B may be curable. The adhesive layers 30A and 30B, in a case in which the layers are cured, thus have a hardness sufficient for protecting the pseudo sheet structure 20. The adhesive layers 30A and 30B after curing are also enhanced in impact resistance, and the adhesive layers 30A and 30B after curing can also be suppressed in deformation due to impact.

The adhesive layers 30A and 30B are preferably curable by energy ray such as ultraviolet ray, visible energy ray, infrared ray, or electron beam because the layers can be simply cured in a short time. Such curing by energy ray here also encompasses thermal curing by heating with energy ray.

The conditions of curing by energy ray differ depending on the energy ray used, and, for example, the amount of irradiation with ultraviolet ray is preferably from 10 mJ/cm² to 3,000 mJ/cm² and the irradiation time is preferably from 1 second to 180 seconds in the case of curing by irradiation with ultraviolet ray.

Examples of the adhesive in the adhesive layers 30A and 30B also include a so-called heat seal type adhesive for adhesion by heat and an adhesive that is wetted and thus exhibits pasting properties, and the adhesive layers 30A and 30B are each preferably a pressure-sensitive adhesive layer formed from a pressure-sensitive adhesive from the viewpoint of easiness of application. The pressure-sensitive adhesive in such a pressure-sensitive adhesive layer is not particularly limited. Examples of the pressure-sensitive adhesive include an acrylic pressure-sensitive adhesive, a urethane-based pressure-sensitive adhesive, a rubber-based pressure-sensitive adhesive, a polyester-based pressure-sensitive adhesive, a silicone-based pressure-sensitive adhesive, and a polyvinyl ether-based pressure-sensitive adhesive. In particular, the pressure-sensitive adhesive is preferably at least any pressure-sensitive adhesive selected from the group consisting of an acrylic pressure-sensitive adhesive, a urethane-based pressure-sensitive adhesive, and a rubber-based pressure-sensitive adhesive, more preferably an acrylic pressure-sensitive adhesive.

Examples of the acrylic pressure-sensitive adhesive include a polymer including a constituent unit derived from alkyl (meth)acrylate having a straight alkyl group or a branched alkyl group (namely, a polymer obtained by polymerizing at least alkyl (meth)acrylate), and an acrylic polymer including a constituent unit derived from (meth)acrylate having a cyclic structure (namely, a polymer obtained by polymerizing at least (meth)acrylate having a cyclic structure). The "(meth)acrylate" is here used as a term indicating both "acrylate" and "methacrylate", and much the same is true on other similar terms.

In a case in which the acrylic polymer is a copolymer, the form of copolymerization is not particularly limited. The acrylic copolymer may be any of a block copolymer, a random copolymer, or a graft copolymer.

In particular, the acrylic pressure-sensitive adhesive is preferably an acrylic copolymer including a constituent unit (a1) derived from an alkyl (meth)acrylate (a1') (hereinafter, also referred to as "monomer ingredient (a1')") having a linear alkyl group having from 1 to 20 carbon atoms, and a constituent unit (a2) derived from a functional group-containing monomer (a2') (hereinafter, also referred to as "monomer ingredient (a2')").

The acrylic copolymer may further include a constituent unit (a3) derived from a monomer ingredient (a3') other than the monomer ingredient (a1') and the monomer ingredient (a2').

The number of carbon atoms of the linear alkyl group in the monomer ingredient (a1') is preferably from 1 to 12, more preferably from 4 to 8, still more preferably from 4 to 6 from the viewpoint of an enhancement in pressure-sensitive adhesion characteristics. Examples of the monomer ingredient (a1') include methyl (meth)acrylate, ethyl (meth)acrylate, propyl (meth)acrylate, n-butyl (meth)acrylate, 2-ethylhexyl (meth)acrylate, lauryl (meth)acrylate, tridecyl (meth)acrylate, and stearyl (meth)acrylate. Such a monomer ingredient (a1') is preferably butyl (meth)acrylate or 2-ethylhexyl (meth)acrylate, more preferably butyl (meth)acrylate.

The content of the constituent unit (a1) is preferably from 50% by mass to 99.5% by mass, more preferably from 55% by mass to 99% by mass, still more preferably from 60% by mass to 97% by mass, yet still more preferably from 65% by mass to 95% by mass with respect to the total constituent unit (100% by mass) of the acrylic copolymer.

Examples of the monomer ingredient (a2') include a hydroxy group-containing monomer, a carboxy group-containing monomer, an epoxy group-containing monomer, an amino group-containing monomer, a cyano group-containing monomer, a keto group-containing monomer, and an alkoxysilyl group-containing monomer. Among such monomer ingredients (a2'), a hydroxy group-containing monomer and a carboxy group-containing monomer are preferable.

Examples of the hydroxy group-containing monomer include 2-hydroxyethyl (meth)acrylate, 2-hydroxypropyl (meth)acrylate, 2-hydroxybutyl (meth)acrylate, 3-hydroxybutyl (meth)acrylate, and 4-hydroxybutyl (meth)acrylate, and 2-hydroxyethyl (meth)acrylate is preferable.

Examples of the carboxy group-containing monomer include (meth)acrylic acid, maleic acid, fumaric acid, and itaconic acid, and (meth)acrylic acid is preferable.

Examples of the epoxy group-containing monomer include glycidyl (meth)acrylate.

Examples of the amino group-containing monomer include diaminoethyl (meth)acrylate.

Examples of the cyano group-containing monomer include acrylonitrile.

The content of the constituent unit (a2) is preferably from 0.1% by mass to 50% by mass, more preferably from 0.5% by mass to 40% by mass, still more preferably from 1.0% by mass to 30% by mass, yet still more preferably from 1.5% by mass to 20% by mass with respect to the total constituent unit (100% by mass) of the acrylic copolymer.

Examples of the monomer ingredient (a3') include (meth)acrylate having a cyclic structure, such as cyclohexyl (meth)acrylate, benzyl (meth)acrylate, isobornyl (meth)acrylate, dicyclopentanyl (meth)acrylate, dicyclopentenyl (meth)acrylate, dicyclopentenyloxy ethyl (meth)acrylate, imide (meth)acrylate, or acryloylmorpholine; vinyl acetate; and styrene.

The content of the constituent unit (a3) is preferably 0% by mass to 40% by mass, more preferably 0% by mass to 30% by mass, still more preferably 0% by mass to 25% by mass, yet still more preferably 0% by mass to 20% by mass with respect to the total constituent unit (100% by mass) of the acrylic copolymer.

The monomer ingredient (a1') may be used singly, or in combination of two or more kinds thereof, the monomer ingredient (a2') may be used singly, or in combination of two or more kinds thereof, and the monomer ingredient (a3') may be used singly, or in combination of two or more kinds thereof.

The acrylic copolymer may be crosslinked by a crosslinking agent. Examples of the crosslinking agent include known epoxy-based crosslinking agent, isocyanate-based crosslinking agent, aziridine-based crosslinking agent, and metal chelate-based crosslinking agent. In the case of crosslinking the acrylic copolymer, the functional group derived from the monomer ingredient (a2') can be utilized as a crosslinking point reactive with the crosslinking agent.

The pressure-sensitive adhesive layer may contain an energy ray curable ingredient, in addition to the pressure-sensitive adhesive.

For example, in a case in which the energy ray is ultraviolet ray, examples of the energy ray curable ingredient include a compound which is trimethylolpropane tri(meth)acrylate, ethoxylated isocyanuric acid tri(meth)acrylate, ditrimethylolpropane tetra(meth)acrylate, tetramethylolmethane tetra(meth)acrylate, pentaerythritol tri(meth)acrylate, dipentaerythritol monohydroxy penta(meth)acrylate, dipentaerythritol hexa(meth)acrylate, caprolactone-modified dipentaerythritol hexa(meth)acrylate, 1,4-butylene glycol di(meth)acrylate, 1,6-hexanediol di(meth)acrylate, dicyclopentadiene dimethoxy di(meth)acrylate, polyethylene glycol di(meth)acrylate, oligoester (meth)acrylate, urethane (meth)acrylate oligomer, epoxy-modified (meth)acrylate, or polyether (meth)acrylate, and which has two or more ultraviolet polymerizable functional groups in one molecule.

Such an energy ray curable ingredient may be used singly, or in mixture of two or more kinds thereof.

In a case in which the acrylic pressure-sensitive adhesive is applied as the pressure-sensitive adhesive, the energy ray curable ingredient here used can be a compound having a functional group reactive with the functional group derived from the monomer ingredient (a2') in the acrylic copolymer and an energy ray polymerizable functional group in one molecule. Such a functional group of the compound reacts with the functional group derived from the monomer ingredient (a2') in the acrylic copolymer, whereby a side chain in the acrylic copolymer can be polymerized by irradiation with energy ray. Even in a case in which the pressure-sensitive adhesive is any other than the acrylic pressure-sensitive adhesive, an ingredient whose side chain is energy ray polymerizable may be again used as any copolymer ingredient other than the copolymer serving as the pressure-sensitive adhesive.

In a case in which the pressure-sensitive adhesive layer is energy ray curable, the pressure-sensitive adhesive layer may contain a photopolymerization initiator. The photopolymerization initiator can increase the rate of curing of the pressure-sensitive adhesive layer by irradiation with energy ray. Examples of the photopolymerization initiator include benzophenone, acetophenone, benzoin, benzoin methyl ether, benzoin ethyl ether, benzoin isopropyl ether, benzoin isobutyl ether, benzoinbenzoic acid, methyl benzoinbenzoate, benzoin dimethyl ketal, 2,4-diethyl thioxanthone, 1-hydroxycyclohexyl phenyl ketone, benzyl diphenyl sulfide, tetramethylthiuram monosulfide, azobisisobutyronitrile, benzil, dibenzil, diacetyl, 2-chloroanthraquinone, 2,4,6-trimethylbenzoyldiphenylphosphine oxide, 2-benzothiazole-N,N-diethyldithiocarbamate, and oligo{2-hydroxy-2-methyl-1-[4-(1-propenyl)phenyl]propanone}.

The adhesive layers 30A and 30B may each contain an inorganic filling agent. The adhesive layers 30A and 30B, which each contain an inorganic filling agent, thus can be more enhanced in hardness after curing. The adhesive layers 30A and 30B are also enhanced in thermal conductivity. In a case in which an adherend mainly includes glass, the respective linear coefficients of expansion of the heat-generating sheet 100 and the adherend can be closer, and thus the resulting apparatus is enhanced in reliability in a case in which the heat-generating sheet 100 is pasted to the adherend and, if necessary, cured.

Examples of the inorganic filling agent include a powder of silica, alumina, talc, calcium carbonate, titanium white, colcothar, silicon carbide, or boron nitride; beads obtained by spheronization thereof; a single-crystalline fiber; and a glass fiber. In particular, the inorganic filling agent is preferably a silica filler or an alumina filler. Such an inorganic filling agent may be used singly, or in combination of two or more kinds thereof.

The inorganic filling agent is preferably surface-modified (coupled) by a compound having a curable functional group.

Examples of the curable functional group include a hydroxyl group, a carboxyl group, an amino group, a glycidyl group, an epoxy group, an ether group, an ester group, and a group having an ethylenically unsaturated bond. Examples of the compound having such a curable functional group include a silane coupling agent.

The inorganic filling agent is more preferably surface-modified by a compound having an energy ray curable functional group such as a group having an ethylenically unsaturated bond from the viewpoint that fracture resistance of each of the adhesive layers 30A and 30B after curing (strength of each of the adhesive layers 30A and 30B after curing) is easily kept. Examples of the group having an ethylenically unsaturated bond include a vinyl group, a (meth)acryloyl group, and a maleimide group, and a (meth)acryloyl group is preferable from the viewpoints of high reactivity and general versatility.

The adhesive layers 30A and 30B cured are tough due to, for example, an inorganic filling agent surface-modified by a compound having an energy ray curable functional group.

In a case in which the adhesive layers 30A and 30B each contain an inorganic filling agent surface-modified, the adhesive layers 30A and 30B each preferably include separately an energy ray curable ingredient.

The average particle size of the inorganic filling agent is preferably 1 µm or less, more preferably 0.5 µm or less. In a case in which the average particle size of the inorganic filling agent is in such a range, the adhesive layers 30A and 30B can be easily enhanced in light transmissiveness, and the heat-generating sheet 100 (namely, adhesive layers 30A and 30B) can be easily decreased in haze. The lower limit of the average particle size of the inorganic filling agent is not particularly limited, and is preferably 5 nm or more.

The average particle size of the inorganic filling agent is determined as the average value obtained by observing twenty of such inorganic filling agents with a digital microscope, measuring the average size of the maximum size and the minimum size of each of the inorganic filling agents as the diameter, and averaging the results.

The content of the inorganic filling agent is preferably from 0% by mass to 95% by mass, more preferably from 5% by mass to 90% by mass, still more preferably from 10% by mass to 80% by mass with respect to the total of the adhesive layers 30A and 30B.

The pencil hardness of each of the adhesive layers 30A and 30B after curing is preferably HB or more, more preferably F or more, still more preferably H or more. Thus, the adhesive layers 30A and 30B after curing can be more enhanced in function of protecting the pseudo sheet structure 20, and can more sufficiently protect the pseudo sheet structure 20. The pencil hardness is here a value measured according to JISK5600-5-4.

The adhesive layers 30A and 30B may each include other ingredient. Examples of such other ingredient include a well-known additive such as a colorant, an organic solvent, a flame retardant, a thickener, an ultraviolet absorber, an antioxidant, a preservative, a mildew-proofing agent, a plasticizer, a defoamer, or a wettability modifier.

The thickness of each of the adhesive layers 30A and 30B is preferably from 3 µm to 150 µm, more preferably from 5 µm to 100 µm from the viewpoint of, for example, adhesiveness. The adhesive layers 30A and 30B may be different in respective ingredients contained, characteristics, and configurations thereof.

### (Base Material)

The base materials 40A and 40B each have a function of supporting an adhesive layer. The base materials 40A and 40B are each, for example, a member also serving as a resin protection layer. The base materials 40A and 40B may each have a sheet shape, an elongated shape, or any shape other than these shapes.

Examples of the base materials 40A and 40B include a layer including a thermoplastic resin.

Examples of the thermoplastic resin include a well-known resin such as a polyolefin resin, a polyester resin, a polyacrylic resin, a polystyrene resin, a polyimide resin, a polyimideamide resin, a polyamide resin, a polyurethane resin, a polycarbonate resin, a polyarylate resin, a melamine resin, an epoxy resin, a urethane resin, a silicone resin, or a fluororesin, or a mixed resin including two or more thereof, and a resin film including such a resin is suitably used.

The base materials 40A and 40B may be each a layer including a thermosetting resin.

Examples of the thermosetting resin include a layer of a well-known composition such as an epoxy resin composition, a resin composition to be cured by a urethane reaction, or a resin composition to be cured by a radical polymerization reaction. In a case in which the base materials 40A and 40B are each formed by coating with such a curable resin composition, base materials 40A and 40B each containing a thermal conductive inorganic filling agent described below are easily obtained.

Examples of the epoxy resin composition include a combination of an epoxy resin such as a polyfunctional epoxy resin, a bisphenol A type epoxy resin, a bisphenol F type epoxy resin, a biphenyl type epoxy resin, or a dicyclopentadiene type epoxy resin, with a curing agent such as an amine compound or a phenolic curing agent.

Examples of the resin composition to be cured by a urethane reaction include a resin composition including (meth)acrylic polyol and a polyisocyanate compound.

Examples of the resin composition to be cured by a radical polymerization reaction include a radically polymerizable reactive resin composition of, for example, a (meth)acryloyl group or an unsaturated polyester, and examples include a (meth)acrylic resin having a radically polymerizable group in a side chain (for example, a (meth)acrylic resin obtained by reacting a polymer of a vinyl monomer having a reactive group (for example, hydroxy (meth)acrylate or glycidyl (meth)acrylate) with a monomer having a group reactive with a reactive group of the copolymer and having a radically polymerizable group (for example, (meth)acrylic acid or an isocyanate group-containing (meth)acrylate)), epoxy acrylate having a (meth)acrylic group, obtained by reacting a terminal of an epoxy resin with, for example, (meth)acrylic acid, and an unsaturated polyester obtained by condensation of carboxylic acid having an unsaturated group (for example, fumaric acid) with diol.

The base materials 40A and 40B may each contain a thermal conductive inorganic filling agent. The base materials 40A and 40B, in a case in which the materials each contain a thermal conductive inorganic filling agent, can more effectively prevent the variation in temperature rise (ununiformity of the distribution of temperature rise) from occurring in the surface of the heat-generating sheet 100.

The thermal conductive inorganic filling agent is not particularly limited as long as the agent is an inorganic filling agent having a thermal conductivity of 10 W/mK or more, and examples thereof include a metal particle, a metal oxide particle, a metal hydroxide particle, and a metal nitride-based particle. Specific examples of the thermal conductive inorganic filling agent include a well-known inorganic particle such as a silver particle, a copper particle, an aluminum particle, a nickel particle, a zinc oxide particle, an aluminum oxide particle, an aluminum nitride particle, a silicon oxide particle, a magnesium oxide particle, an aluminum nitride particle, a titanium particle, a boron nitride particle, a silicon nitride particle, a silicon carbide particle, a diamond particle, a graphite particle, a carbon nanotube particle, a metallic silicon particle, a carbon fiber particle, a fullerene particle, or a glass particle.

Such a thermal conductive inorganic filling agent may be used singly, or in combination of two or more kinds thereof.

The content of the thermal conductive inorganic filling agent is preferably from 1% by mass to 90% by mass, more preferably from 2% by mass to 70% by mass, still more preferably from 5% by mass to 50% by mass with respect to the total of the resin protection layer.

The base materials 40A and 40B may each contain a colorant. In a case in which the base materials 40A and 40B each contain a colorant and thus the base materials 40A and 40B are each a coloring layer, the electrically conductive linear-bodies 22 are increased in shieldability.

The colorant is not particularly limited, and any well-known colorant such as an inorganic pigment, an organic pigment, or a dye may be applied for any purpose.

The base materials 40A and 40B may each contain other additive. Examples of such other additive include a curing agent, an anti-aging agent, a light stabilizer, a flame retardant, an electrically conductive agent, an antistatic agent, and a plasticizer.

An image (for example, an image such as a graphic, a character, a pattern, or a picture) may be formed by an image forming material (for example, ink and/or toner) on each surface of the base materials 40A and 40B, the surface being closer to the pseudo sheet structure 20. The method of forming the image, here applied, is a well-known printing method such as gravure printing, offset printing, screen printing, inkjet printing, or thermal transfer printing. In such a case, the base materials 40A and 40B each not only serve as a decorative layer, but also have a function of protecting decoration with an image. The heat-generating sheet 100 can be here applied as a sheet for three-dimensional decoration.

The thickness of each of the base materials 40A and 40B is, for example, preferably from 4 µm to 2500 µm, more preferably from 10 m to 2300 µm, still more preferably from 15 µm to 2000 µm.

### -First and Second Strip Electrodes-

The first and second strip electrodes EA and EB are disposed with being electrically connected to both end portions in the longitudinal direction of the electrically conductive linear-bodies 22.

For example, an electrically conductive foil or plate is applied to the first and second strip electrodes EA and EB. Specifically, for example, a foil or plate of a metal such as gold, silver, copper, nickel, iron, aluminum, tungsten, molybdenum, or titanium is applied. Other foil or plate of an alloy, including the above metal or other metal, or a non-metal element, such as stainless steel, carbon steel, brass, phosphor bronze, a zirconium/copper alloy, beryllium copper, iron/nickel, nichrome, nickel/titanium, kanthal, hastelloy, or rhenium/tungsten may be applied to the first and second strip electrodes EA and EB, or a strip object including a carbon material such as a carbon nanotube, a carbon nanofiber, or graphene may also be used.

The strip electrodes EA and EB may have a structure forming a shape having a certain width for a reduction in contact resistance with the electrically conductive linear-bodies 22. The strip electrodes may be each, for example, a mesh having pores. Not the strip electrodes may be each provided on a layer adjacent to the pseudo sheet structure 20, for example, an adhesive layer, in the form of an electrically conductive foil, plate, or strip object formed in advance, but the strip electrodes may be each formed on, for example, an adhesive layer by, for example, plating, soldering, sputtering, or printing.

The thickness of each of the first and second strip electrodes EA and EB is preferably from 5 µm to 120 µm, more preferably from 10 µm to 100 µm.

### (Characteristics of Heat-Generating Sheet)

The light transmittance of the heat-generating sheet 100 according to the embodiment is preferably 70% or more, more preferably from 70% to 100%, still more preferably from 80% to 100%. In a case in which the heat-generating sheet 100 is pasted, as an adherend, to, for example, a window of an automobile, visibility is demanded which allows for recognition of, for example, the situations of other vehicles, pedestrians, signals, markers, and roads. In a case in which the heat-generating sheet 100 is pasted, as an adherend, to a mirror, contrast clarity is demanded. Thus, in a case in which the light transmittance of the heat-generating sheet 100 is 70% or more, such visibility or contrast clarity can be easily obtained.

The light transmittance of the heat-generating sheet 100 is determined as the average value obtained by measuring the light transmittance in the visible region (from 380 nm to 760 mm) with a light transmittance meter and averaging the measurement values.

### (Method of Producing Sheet)

The method of producing the heat-generating sheet 100 of the embodiment is not particularly limited. The heat-generating sheet 100 is produced through, for example, the following steps.

First, the base material 40A is coated with a composition for forming the adhesive layer 30A, thereby forming a coating film. Next, the coating film is dried, thereby producing the adhesive layer 30A. Next, the electrically conductive linear-bodies 22 are arranged and disposed on a laminated body of the base material 40A and the adhesive layer 30A (on the adhesive layer 30A), thereby forming the pseudo sheet structure 20. For example, with the laminated body of the base material 40A and the adhesive layer 30A being disposed on the outer periphery of a drum member, the electrically conductive linear-bodies 22 are spirally wound on the surface of the adhesive layer 30A under rotation of the drum member.

Thereafter, a bundle of the electrically conductive linear-bodies 22 spirally wound is cut along with the axial direction of the drum member. Thus, not only the pseudo sheet structure 20 is formed, but also a laminated body disposed on the surface of the adhesive layer 30A is obtained. A laminated body of the base material 40A, the adhesive layer 30A, and the pseudo sheet structure 20 is taken out from the drum member.

Next, one first strip electrode EA and one second strip electrode EB are pasted on both ends in the longitudinal direction of the electrically conductive linear-bodies 22 of wires or the like, in the surface of the resulting pseudo sheet structure 20. Thereafter, the resulting laminated body with the strip electrodes, and a laminated body of the base material 40B and the adhesive layer 30B are pasted to each other so that the respective adhesive layers are opposite to each other.

Next, the resulting electrically conductive sheet 10 with strip electrodes (one electrically conductive sheet 10 having a strip electrode EB0 before cutting) is slit, whereby at least one of an objective first strip electrodes EA or second strip electrode EB is separated. The slit is made along with the width direction of the first strip electrodes EA and the second strip electrodes EB. The number of such slits and the positions thereof are selected depending on respective objective numbers of the first strip electrodes EA and the second strip electrodes EB, and the length of each of such electrodes after separation. Thereafter, an insulating tape or the like is pasted to a slit section in order to insulate strip electrodes separated, and thus an insulating layer 42 is provided.

The heat-generating sheet 100 according to the embodiment is obtained through the above steps.

The laminated body of the base material 40B and the adhesive layer 30B may be pasted to the surface of the pseudo sheet structure 20 of the laminated body disposed on the drum member. Such a method, for example, facilitates adjustment of the interval L between adjacent electrically conductive linear-bodies 22 in the pseudo sheet structure 20, by moving an extended portion of the electrically conductive linear-bodies 22 along with a direction in parallel with the axis of the drum member under rotation of the drum member.

In this regard, after arrangement of the electrically conductive linear-bodies 22 and formation of the pseudo sheet structure 20 without placement of the laminated body of the base material 40A and the adhesive layer 30A on the outer periphery of the drum member, one surface of the resulting pseudo sheet structure 20 may be pasted to the laminated body of the base material 40A and the adhesive layer 30A (to the adhesive layer 30A). Thereafter, another surface of the pseudo sheet structure 20 may be pasted to the laminated body of the base material 40B and the adhesive layer 30B, thereby producing the heat-generating sheet 100.

### (Application of Heat-Generating Sheet)

The heat-generating sheet 100 according to the embodiment can be utilized in, for example, a heat-generating article for heating (for example, an interior part of an automobile, which generates heat), or a surface heat-generating object for a surface heat-generating article such as a defogging heater to be pasted to window glass or a mirror. The heat-generating sheet 100E according to the fifth embodiment can be suitably applied to, for example, an application of a defogging heater for an article having a complicated planar shape, such as a sideview mirror, from the viewpoint that the planar shape of the sheet can be changed.

The heat-generating sheet 100 according to the embodiment can also be utilized as a sheet for covering a molded article, with which the surface of the molded article is covered according to a three-dimensional molding method such as TOM molding, film insert molding, or vacuum molding.

### (Modified Example of Layer Configuration)

The heat-generating sheet 100 according to the embodiment is not limited to the above layer configuration, and may be modified or altered. Hereinafter, a modified example of the layer configuration of the heat-generating sheet 100 according to the embodiment will be described. Hereinafter, any member which is the same as that described in the heat-generating sheet 100 according to the embodiment is marked with the same symbol in the drawings, and the description thereof is omitted or simplified.

The heat-generating sheet 100 according to the embodiment is not limited to, for example, the above layer configuration, and may be other layer configuration.

For example, the heat-generating sheet 100 may be a heat-generating sheet 101, as illustrated in Figure 7, which basically has the layer configuration illustrated in Figure 2 and has at least one layer of 1) a resin layer 32 provided between a base material 40A and an adhesive layer 30A (hereinafter, also referred to as "intermediate resin layer 32") or 2) a resin layer 34 on a surface of a pseudo sheet structure 20, the surface being opposite to a surface having the adhesive layer 30A (hereinafter, also referred to as "lower resin layer 34").

Figure 7 illustrates a heat-generating sheet 101 in which the heat-generating sheet 100A illustrated in Figure 1 further includes the intermediate resin layer 32 and the lower resin layer 34.

The intermediate resin layer 32 is described.

The intermediate resin layer 32 is, for example, a layer provided as a function layer such as a thermally conductive layer, a coloring layer, a decorative layer, a primer layer, or an ingredient transfer prevention layer. The intermediate resin layer 32 may be provided from a plurality of such layers different in function. The intermediate resin layer 32 may be a single layer and have a plurality of functions.

For example, in a case in which the intermediate resin layer 32 is a thermally conductive layer, the intermediate resin layer 32 is configured from, for example, a layer including a thermal conductive inorganic filling agent and a thermoplastic resin. In a case in which the intermediate resin layer 32 is a thermally conductive layer, the occurrence of the variation in temperature rise in the surface of the heat-generating sheet 101 can be more effectively prevented.

In a case in which the intermediate resin layer 32 is a coloring layer, the intermediate resin layer 32 is configured from, for example, a layer including a colorant and a thermoplastic resin. In a case in which the intermediate resin layer 32 is a coloring layer, the electrically conductive linear-bodies 22 are increased in shieldability. In such a case, the base material 40A applied may be a layer having light transmissiveness.

In a case in which the intermediate resin layer 32 is a decorative layer, the layer is configured from a resin layer (for example, a layer including a thermoplastic resin) with a surface in which an image (for example, an image such as a graphic, a character, a pattern, or a picture) is formed by an image forming material (for example, ink and/or toner). The method of forming the image, here applied, is a well-known printing method such as gravure printing, offset printing, screen printing, inkjet printing, or thermal transfer printing. In a case in which the intermediate resin layer is a decorative layer, the heat-generating sheet 101 can be applied as a sheet for decoration. In such a case, the base material 40A applied is a layer having light transmissiveness.

Examples of each of the ingredients forming the intermediate resin layer 32 and other ingredient include the same ingredients as in the base material 40A.

The thickness of the intermediate resin layer 32 is, for example, preferably from 5 to 1300 µm, more preferably from 10 to 1000 µm, still more preferably from 15 to 900 µm from the viewpoint that each function of the intermediate resin layer 32 is ensured.

A layer (coloring layer) including the coloring layer is not limited to the intermediate resin layer 32, and can be applied to at least any one layer forming a layer provided on a surface of the pseudo sheet structure 20, the surface being closer to the base material 40A.

The layer including a thermal conductive inorganic filling agent (thermally conductive layer) is not limited to the intermediate resin layer 32, and can be applied to at least any one layer forming a layer provided on a surface of the pseudo sheet structure 20, the surface being closer to the base material 40A.

The decorative layer is not limited to the intermediate resin layer 32, and can be applied to at least any one layer forming a layer provided on a surface of the pseudo sheet structure 20, the surface being closer to the base material 40A.

The lower resin layer 34 is described.

The lower resin layer 34 is a resin layer for heat sealing the heat-generating sheet 101 to a surface of a molded article in covering of the surface of a molded article by three-dimensional molding, in a case in which the heat-generating sheet 101 is utilized as a sheet for three-dimensional molding. In particular, a heat-generating sheet 101 including the lower resin layer 34 is suitable in a film insert method as a three-dimensional molding method.

The lower resin layer 34 to be applied is, for example, a layer including a thermoplastic resin. Examples of each of the ingredients forming the lower resin layer 34 and other ingredient include the same ingredients as in the base material 40A. In particular, the lower resin layer 34 is preferably, for example, a layer including a polyolefin such as polypropylene or a layer including an acrylonitrile-butadiene-styrene copolymer from the viewpoint of an enhancement in thermal adhesiveness to a molded article.

The thickness of the lower resin layer 34 is, for example, preferably from 5 to 1300 µm, more preferably from 10 to 1000 µm, still more preferably from 15 to 900 µm, from the viewpoint of an enhancement in thermal adhesiveness to a molded article.

Alternatively, the heat-generating sheet 100 according to the embodiment may have, for example, a configuration not including any intermediate resin layer 32, lower resin layer 34, adhesive layer 30B, base material 40A, and base material 40B, and it is here preferable that the adhesive layer 30A can be cured, thereby forming a surface film.

Such a modified example of the layer configuration is one example, and the heat-generating sheet 100 according to the embodiment can be variously configured for any purpose.

The heat-generating sheet 100 according to the embodiment may be, for example, a heat-generating sheet not illustrated, in which the electrically conductive linear-bodies 22 of the pseudo sheet structure 20 are regularly or irregularly curved or bent. Specifically, the electrically conductive linear-bodies 22 may have, for example, a waveform such as a sine wave, a rectangular wave, a triangle wave, or a saw wave. In other words, the pseudo sheet structure 20 may have, for example, a structure in which a plurality of corrugated electrically conductive linear-bodies 22 extending in one direction are arranged at equal intervals in the direction perpendicular to the extending direction of the electrically conductive linear-bodies 22.

The electrically conductive linear-bodies 22 to be applied are corrugated linear-bodies, whereby such corrugated electrically conductive linear-bodies 22 can be straightened and easily elongated in the extending direction of the electrically conductive linear-bodies 22 according to elongation of the heat-generating sheet 100 in three-dimensional molding of the heat-generating sheet 100 and covering of the surface of a molded article therewith. Therefore, the heat-generating sheet 100 can be easily elongated without restriction by the electrically conductive linear-bodies 22 in the extending direction of the electrically conductive linear-bodies 22.

In this regard, the heat-generating sheet 100 can be easily elongated without restriction by the electrically conductive linear-bodies 22 in the arrangement direction of the electrically conductive linear-bodies 22 because the electrically conductive linear-bodies 22 are not mutually connected.

In other words, the electrically conductive linear-bodies 22 to be applied are corrugated linear-bodies, whereby failure in elongation of the heat-generating sheet 100 or breakage of the electrically conductive linear-bodies 22 is suppressed in three-dimensional molding of the heat-generating sheet 100 and covering of the surface of a molded article therewith.

The wavelength λ (waveform pitch) of the corrugated electrically conductive linear-bodies 22 is here preferably from 0.3 mm to 100 mm, more preferably from 0.5 mm to 80 mm from the viewpoint of suppression of failure in elongation of the heat-generating sheet 100 or breakage of the electrically conductive linear-bodies 22.

The amplitude A of the corrugated electrically conductive linear-bodies 22 is preferably from 0.3 mm to 200 mm, more preferably from 0.5 mm to 160 mm from the same viewpoint. The amplitude A here means the entire amplitude (peak to peak).

The heat-generating sheet 100 according to the embodiment may include a release layer, not illustrated, for the purpose of surface protection. For example, a heat-generating sheet 100 including a release layer instead of the adhesive layer 30B and the base material 40B may be made in each of the above embodiments.

The release layer is not particularly limited. For example, the release layer preferably includes a release base material and a release agent layer formed on the release base material by coating with a release agent from the viewpoint of easiness of handling. The release layer may include a release agent layer on only one surface of the release base material, or may include a release agent layer on each of both surfaces of the release base material.

Examples of the release base material include a paper base material, laminate paper obtained by laminating a thermoplastic resin (for example, polyethylene) on a paper base material, and a plastic film. Examples of the paper base material include glassine paper, coated paper, and cast-coated paper. Examples of the plastic film include a film of a polyester such as polyethylene terephthalate, polybutylene terephthalate, or polyethylene naphthalate; and a film of a polyolefin such as polypropylene or polyethylene. Examples of the release agent include an olefin-based resin, a rubber-based elastomer (for example, a butadiene-based resin or an isoprene-based resin), a long-chain alkyl-based resin, an alkyd-based resin, a fluororesin, and a silicone-based resin.

The thickness of the release layer is not particularly limited. The thickness of the release layer is usually preferably from 20 µm to 200 µm, more preferably from 25 µm to 150 µm.

The thickness of the release agent layer in the release layer is not particularly limited. In a case in which the release agent layer is formed by coating with a solution including the release agent, the thickness of the release agent layer is preferably from 0.01 µm to 2.0 µm, more preferably from 0.03 µm to 1.0 µm.

In a case in which a plastic film is used as the release base material, the thickness of the plastic film is preferably from 3 µm to 150 µm, more preferably from 5 µm to 100 µm.

### Examples

Hereinafter, the disclosure will be further specifically described with reference to Examples. It is noted that such each Example does not limit the disclosure.

### [Example 1]

A pressure-sensitive sheet (130 mm × 100 mm, product name: PET50 (A)PL SHIN 8LK available from Lintec Corporation, thickness of pressure-sensitive adhesive layer: 23 µm) was prepared which included a pressure-sensitive adhesive layer on a base material. A molybdenum wire (diameter 25 µm, volume resistance value: 8.0 × 10⁻⁵ Ω•m) wound around a bobbin was prepared for each electrically conductive linear-body.

Next, the pressure-sensitive sheet was wound around a rubber drum member with an outer periphery made of rubber so that a pressure-sensitive adhesion surface faced outward and no wrinkles occurred. Both ends of the pressure-sensitive sheet in the drum circumferential direction were fixed by a double-sided tape.

Next, the molybdenum wire wound around the bobbin was attached to the pressure-sensitive adhesion surface of the pressure-sensitive sheet located near an end portion of the rubber drum member, and then reeled on the rubber drum member with the wire being extended, and the rubber drum member was moved in the direction in parallel with the drum axis by little and little and the wire was wound around the rubber drum at constant intervals in a spiral manner. A plurality of such wires were thus provided on the pressure-sensitive adhesion surface (surface of the pressure-sensitive adhesive layer) of the pressure-sensitive sheet with the distance between adjacent wires being kept constant, and a pseudo sheet structure including the wires was formed.

Next, such molybdenum wires were cut in parallel with the drum axis on opposite portions at both ends of the pressure-sensitive sheet in the drum circumferential direction in a laminated body of the pseudo sheet structure and the pressure-sensitive sheet. The laminated body was removed from the rubber drum member.

The diameter D of each of the wires and the interval L between the wires in the pseudo sheet structure of the resulting laminated body were as follows. The diameter D of each of the wires was 25 µm and the interval L between the wires arranged was 0.7 mm.

Next, 20 µm-thick copper foil having a size of 10 mm width × 100 mm length was provided as each strip electrode at a position of 5 mm from each of both ends (both ends in the longitudinal direction of the wires) of the pseudo sheet structure in the resulting laminated body. One first strip electrode and one second strip electrode were thus provided.

Next, a pressure-sensitive sheet (product name: PET50 (A)PL SHIN 8LK available from Lintec Corporation, thickness of pressure-sensitive adhesive layer: 23 µm) including a pressure-sensitive adhesive layer on a base material was pasted to a laminated body of the strip electrodes, the pseudo sheet structure, and the pressure-sensitive sheet, whereby an electrically conductive sheet with strip electrodes was obtained.

Next, the second strip electrode was divided by slitting the strip electrode and the electrically conductive sheet at a position half the length in the electrically conductive sheet with strip electrodes. A polyimide tape was applied to the slit section, whereby two second strip electrodes obtained by the dividing were insulated. Specifically, a polyimide tape (having a thickness of 55 µm, available from AS ONE Corporation) was cut to a size of 10 mm × 20 mm, and the central portion thereof in the longitudinal direction was inserted into the slit section. Next, a portion of the polyimide tape, protruded from the electrically conductive sheet with strip electrodes, was pasted on each of both surfaces of the electrically conductive sheet.

Thereafter, the electrically conductive sheet with strip electrodes was partially scraped off and a connecting portion was provided so that the first strip electrode and the two strip electrodes obtained by the dividing could be each electrically connected to the exterior. The connecting portion was subjected to wiring processing.

A heat-generating sheet (heat-generating sheet according to first embodiment) configured as illustrated in Figure 1 was obtained through the above steps.

### [Example 2]

A heat-generating sheet (the heat-generating sheet according to the second embodiment) configured as illustrated in Figure 3 was obtained according to the method of producing the heat-generating sheet of Example 1.

### [Example 3]

A heat-generating sheet (the heat-generating sheet according to the third embodiment) configured as illustrated in Figure 4 was obtained according to the method of producing the heat-generating sheet of Example 1.

### [Example 4]

A heat-generating sheet (the heat-generating sheet according to the fourth embodiment) configured as illustrated in Figure 5 was obtained according to the method of producing the heat-generating sheet of Example 1.

### [Example 5]

A heat-generating sheet (the heat-generating sheet according to the fifth embodiment) configured as illustrated in Figure 6 was obtained according to the method of producing the heat-generating sheet of Example 1.

### [Comparative Example 1]

The electrically conductive sheet with strip electrodes, which was obtained by the process of producing the heat-generating sheet of Example 1 and which was not slit for dividing the second strip electrode, was adopted as a heat-generating sheet of Comparative Example 1 (see Figure 8). The electrically conductive sheet was here partially scraped off and a connecting portion was provided so that the first strip electrode and the second strip electrode could be each electrically connected to the exterior. The connecting portion was subjected to wiring processing.

### [Measurement of Resistance Value of Heat-Generating Sheet]

A power supply (1687B DC Power Supply available from B&K Precision Corporation) was connected to wiring of two connecting portions (connecting portions 14A and 14B: see Figure 1, and Figure 3 to Figure 6) provided on strip electrodes located at both ends of the conduction path of the heat-generating region in the heat-generating sheet of each Example. A voltage of 4.5 V was applied between such strip electrodes, and the resistance value was calculated from the resulting current value. The resistance value calculated was defined as the resistance value of the heat-generating sheet. In Comparative Example 1, a voltage of 4.5 V resulted in a too high current value, and thus a voltage of 2 V was applied for measurement.

The heat-generating sheet of Example 1 was here set so that a power supply was connected to wiring of a connecting portion (connecting portion 14A: see Figure 1) provided on the second strip electrode located at one end of the conduction path of the heat-generating region and a connecting portion (connecting portion 14C: see Figure 1) provided on the first strip electrode located in the middle of the conduction path of the heat-generating region, and a voltage of 4.5 V was applied between the strip electrodes and the resistance value was also calculated from the resulting current value.

The resistance value was measured in an environment of a temperature of 25°C and a relative humidity of 50%.

### [Temperature of Each Heat-Generating Region of Heat-Generating Sheet]

The heat-generating temperature of each heat-generating region of the heat-generating sheet after a lapse of 3 minutes from voltage application was measured by thermography in measurement of the resistance value of the heat-generating sheet. The heat-generating temperature of each heat-generating region of the heat-generating sheet was here the temperature at the central portion of each heat-generating region. The voltage in measurement of the resistance value in Comparative Example 1 was different from that in each Example and could not serve as a comparative subject, and thus was not measured.

**[Table 1]**

| | Resistance value of heat-generating sheet (Ω) | | Heat-generating temperature (°C) of each heat-generating region | | | | Reference diagram |
|---|---|---|---|---|---|---|---|
| | Voltage application position between connecting portions 14A and 14B | Voltage application position between connecting portions 14A and 14C | First heat-generating region | Second heat-generating region | Third heat-generating region | Fourth heat-generating region | |
| Example 1 | 0.83 | 0.5 | 52 | 55 | - | - | Figure 1 |
| Example 2 | 1.68 | - | 57 | 63 | 60 | - | Figure 3 |
| Example 3 | 3.2 | - | 52 | 58 | 55 | 53 | Figure 4 |
| Example 4 | 3.75 | - | 32 | 62 | 63 | 34 | Figure 5 |
| Example 5 | 0.78 | - | 55 | 50 | - | - | Figure 6 |
| Comparative Example 1 | 0.2 | - | Unmeasurable | - | - | - | Figure 8 |

It was found from the above results that the heat-generating sheet of each of Examples was changed in resistance value depending on the respective numbers of the first strip electrodes and the second strip electrodes as compared with the heat-generating sheet of Comparative Example 1 having one first strip electrode and one second strip electrode.

In particular, it was found that each of the heat-generating sheets of Examples 4 and 5 was a heat-generating sheet having a heat-generating region high in heat-generating temperature among heat-generating regions and thus having a region selectively high in heat-generating temperature.

The descriptions of symbols are as follows.
10 electrically conductive sheet
11 heat-generating region
11A first heat-generating region
11B second heat-generating region
11C third heat-generating region
11D fourth heat-generating region
12 slit section
14A, 14B, 14C connecting portion
20 pseudo sheet structure
22 electrically conductive linear-bodies
30A, 30B adhesive layer
30A adhesive layer
30B adhesive layer
32 resin layer (intermediate resin layer)
34 resin layer (lower resin layer)
40A, 40B base material
42 insulating layer
100 heat-generating sheet
EA first strip electrode
EA1, EA2 strip electrode
EB second strip electrode
EB1, EB2, EB3 strip electrode
100A heat-generating sheet
100A, 100B heat-generating sheet
100C heat-generating sheet
100D heat-generating sheet
100E heat-generating sheet
100R heat-generating sheet
101 heat-generating sheet

The disclosure of Japanese Patent Application No. 2018-103875 is herein incorporated by reference in its entity.

All documents, patent applications, and technical standards described herein are herein incorporated by reference, as if each individual document, patent application, and technical standard were specifically and individually indicated to be incorporated by reference.

## Claims

1. A heat-generating sheet comprising:
an electrically conductive sheet having a pseudo sheet structure, serving as a heat-generating region, in which a plurality of electrically conductive linear-bodies, each having a diameter D of 100 µm or less and extending in one direction, are arranged at intervals;
one or more first strip electrodes each electrically connected to one end in a longitudinal direction of each of the plurality of electrically conductive linear-bodies in the pseudo sheet structure; and
a plurality of second strip electrodes each electrically connected to another end in the longitudinal direction of each of the plurality of electrically conductive linear-bodies in the pseudo sheet structure, a plurality of heat-generating regions, which serve as the heat-generating region, being formed between the plurality of second strip electrodes and the one or more first strip electrodes,
wherein the plurality of heat-generating regions are coupled with the respective one or more first strip electrodes or the respective second strip electrodes so that conduction directions of adjacent heat-generating regions alternate with each other.

2. The heat-generating sheet according to claim 1, comprising:
a number NA of one or more strip electrodes EA, serving as the one or more first strip electrodes, which comprise a strip electrode EA1 and which are arranged with the strip electrode EA1 being at an end, wherein NA ≥ 1, and
a number NB of one or more strip electrodes EB, serving as the second strip electrodes, which include a strip electrode EB1 and which are arranged with the strip electrode EB 1 being at an end, wherein NA+1 ≥ NB ≥ NA and wherein one 2n-1^{th} heat-generating region is formed between an n^{th} strip electrode NBn counted from the strip electrode EB 1 in the NB of strip electrodes EB and an n^{th} strip electrode EAn counted from the strip electrode EA1 in the NA or the plurality of strip electrodes EA, and one 2n^{th} heat-generating region is formed between an n+1^{th} strip electrode EB (n+1) and the strip electrode EAn, and wherein NA ≥ n ≥ 1.

3. The heat-generating sheet according to claim 1 or 2, having heat-generating regions different in width in the plurality of heat-generating regions.

4. The heat-generating sheet according to any one of claims 1 to 3, comprising a strip electrode having heat-generating regions different in length in the plurality of heat-generating regions.

5. The heat-generating sheet according to any one of claims 1 to 4, wherein at least two first strip electrodes, two second strip electrodes, or a combination thereof, are arranged and provided in a longitudinal direction of the one or more first strip electrodes or the second strip electrodes, with adjacent first strip electrodes, second strip electrodes, or a combination thereof, being bordered by a slit section provided on the electrically conductive sheet.
